# EUROPEAN PATENT APPLICATION

(11) **EP 4 549 121 A1**
(43) Date of publication of application: **07.05.2025**
(21) Application number: 24204196.0
(22) Date of filing: 02.10.2024
(51) Int. Cl.: B29C 33/00, B29C 33/12, B29C 45/14

(54) **MOLDING SYSTEM AND MOLDING METHOD**

(30) Priority: 02.11.2023 US 202318500132
(71) Applicant: INTEL Corporation, Santa Clara, CA 95054 (US)
(72) Inventor: DUAN, Gang, Chandler,, AZ 85248 (US); HAN, Jung Kyu, Chandler,, AZ 85226 (US); JONES, Jesse, Chandler,, AZ 85248 (US); JIMENEZ, Andrew, Mesa,, AZ 85210 (US); XIE, Zhixin, Chandler (US); LI, Yi, Chandler,, AZ 85225 (US); WANG, Yekan, Chandler,, AZ 85286 (US)
(74) Representative: Viering, Jentschura & Partner mbB Patent- und Rechtsanwälte

(57) **Abstract**

Various aspects may provide a molding system. The molding system may include a molding unit which includes a first mold panel and a second mold panel. The first mold panel and the second mold panel may include a mold cavity which surrounds a semiconductor workpiece along a side surface of the semiconductor workpiece, with the first mold panel and the second mold panel engaged with the semiconductor workpiece. Various aspects may also provide a molding method which utilize the molding system.

## Description

### Background

The semiconductor industry's increasing emphasis on advanced packaging technology, crucial for upholding Moore's Law, has led to rising demand for sturdy core materials, like glass. Glass offers customizable properties, including an adjustable coefficient of thermal expansion, total thickness variation, and optical properties.

However, the fragility of glass poses challenges during its handling. Edge chipping on glass from contact with tools can lead to damage, and stress that accumulates during the stacking of build-up layers may potentially result in glass core splitting.

Traditionally, methods such as inkjet printing have been utilized to coat the edges of a workpiece, like glass. These conventional methods typically involve moving a dispensing head along the edges of the workpiece and applying coatings line by line. However, this approach has its drawbacks. Firstly, it poses a risk of contaminating the top surface of the workpiece. Secondly, it is a notably slow process, which can adversely impact production efficiency and throughput.

Advanced dicing technologies utilizing lasers have also been explored to prevent the formation of sub-surface cracks that could propagate. However, these approaches have limitations in ensuring full encapsulation of an exposed edge of the workpiece (e.g. glass), leaving it vulnerable in situations involving transportation and temperature fluctuations.

Therefore, there may be a need for an enhanced system and method that addresses at least the challenges mentioned above.

### Brief description of the drawings

In the drawings, like reference characters generally refer to the same parts throughout the different views. The drawings are not necessarily to scale, emphasis instead generally being placed upon illustrating the principles of the present disclosure. In the following description, various aspects are described with reference to the following drawings, in which:
FIG. 1A is a schematic diagram of a molding system, according to various aspects;
FIG. 1B is a schematic diagram of the molding system of FIG. 1A, with a semiconductor workpiece on a first mold panel of the molding system, according to various aspects;
FIG. 1C is a schematic diagram of the molding system of FIG. 1A, with the first mold panel and a second mold panel of the molding system engaged with opposite surfaces of the semiconductor workpiece, according to various aspects;
FIG. 1D is a schematic diagram depicting mold material within a mold cavity of the molding system of FIG. 1A, according to various aspects;
FIG. 1E is a schematic diagram of the molding system of FIG. 1A, with an ejector unit of the molding system in operation, according to various aspects;
FIG. 1F is a schematic top view of the semiconductor workpiece with a molded part surrounding the semiconductor workpiece, according to various aspects;
FIG. 1G is a schematic diagram of a molding system, which includes a suspension assembly, according to various aspects;
FIG. 1H is a schematic diagram depicting the suspension assembly of FIG. 1G in operation, according to various aspects;
FIG. 1I is a schematic diagram of a molding system, which includes an auxiliary mold panel, according to various aspects;
FIG. 2A is a schematic top view of a molding system which includes a molding unit with a plurality of mold cavities, according to various aspects;
FIG. 2B is a cross-sectional view of the molding unit of FIG. 2A, taken along line A-A, according to various aspects;
FIG. 2C is a schematic side view of a semiconductor workpiece held by a workpiece handling unit of the molding system of FIG. 2A, according to various aspects;
FIG. 2D depicts the semiconductor workpiece of FIG. 2C disposed on a first closed-loop element of a first mold panel of the molding unit of the molding system of FIG. 2A, according to various aspects;
FIG. 2E is a schematic side view of a second mold panel opposing the first mold panel of FIG. 2D, according to various aspects;
FIG. 2F depicts a second closed-loop element of the second mold panel of FIG. 2E engaged with the semiconductor workpiece, according to various aspects;
FIG. 2G depicts mold material delivered into a mold cavity formed by the first mold panel and the second mold panel of FIG. 2F, according to various aspects;
FIG. 2H depicts cured mold material around the side surfaces of the semiconductor workpieces of FIG. 2B, aligned with a dicing unit of the molding system of FIG. 2A, according to various aspects;
FIG. 3A is a schematic top view of a molding system which includes a molding unit with mold panels which are configured to inter-mate corresponding grooves of a semiconductor workpiece, according to various aspects;
FIG. 3B is a cross-sectional view of the molding unit of the molding system of FIG. 3A, taken along line B-B, according to various aspects;
FIG. 4 depicts a molding method, according to various aspects; and
FIG. 5 is a side view of an exemplary final product, which may result from the molding method of FIG. 4, according to various aspects.

### Detailed description

Aspects described below in the context of the apparatus are analogously valid for the respective methods, and vice versa. Furthermore, it will be understood that the aspects described below may be combined, for example, a part of one aspect may be combined with a part of another aspect.

It should be understood that the terms "on", "over", "top", "bottom", "down", "side", "back", "left", "right", "front", "lateral", "side", "up", "down" etc., when used in the following description are used for convenience and to aid understanding of relative positions or directions, and not intended to limit the orientation of any device, or structure or any part of any device or structure. In addition, the singular terms "a", "an", and "the" include plural references unless the context clearly indicates otherwise. Similarly, the word "or" is intended to include "and" unless the context clearly indicates otherwise.

Various aspects may provide a molding apparatus (e.g. a molding system or molding unit) and/or a molding method that enables the precise application of a layer or a coat of mold material exclusively onto designated or selected surface(s) (e.g. side surface(s)) of a workpiece or substrate (e.g. semiconductor workpiece or semiconductor substrate, which may be made of glass), while ensuring that other surface(s) of the workpiece or substrate remain entirely free from any mold material. Once the layer of mold material on the designated surface(s) of the workpiece or substrate is cured (e.g. solidified), it becomes attached to these surface(s) of the workpiece or substrate and functions as a protective layer for them.

For example, the molding apparatus and/or molding method can create or define a mold cavity that is directly defined or bounded by the designated surfaces of the workpiece or substrate. Furthermore, the molding apparatus and/or molding method may establish or form one or more seals that effectively block, obstruct, or prevent the passage or flow of mold material from the mold cavity to the other surface(s) of the workpiece or substrate (i.e. those surface(s) which should remain free of mold material). The seal(s) respectively surround or encircle the other surface(s) of the workpiece or substrate, effectively isolating and/or segregating these other surface(s) from the mold cavity.

According to various aspects, the seals may be created by employing arrangements or components (e.g. closed-loop elements) on the mold panels (e.g. molding plates) of the molding apparatus. These arrangements or components may be configured to engage or come into contact with the other surface(s) of the workpiece or substrate (i.e. those surface(s) which should remain free of mold material), thereby creating the seals at the points of engagement or contact.

According to various aspects, the molding apparatus and/or molding method can be configured to accommodate multiple workpieces or substrates, allowing for the concurrent or simultaneous application of mold material to these multiple workpieces or substrates. This may be done by configuring the mold panels to include a plurality of interconnected mold cavities. Mold material may then be concurrently introduced into the interconnected mold cavities delineated by the mold panels, according to the various aspects.

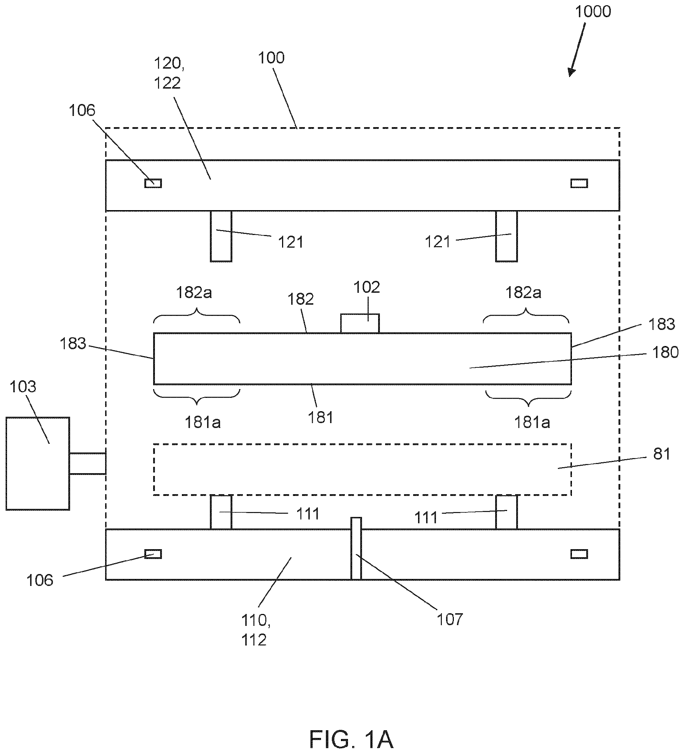

FIG. 1A is a schematic diagram of a molding system, according to various aspects.

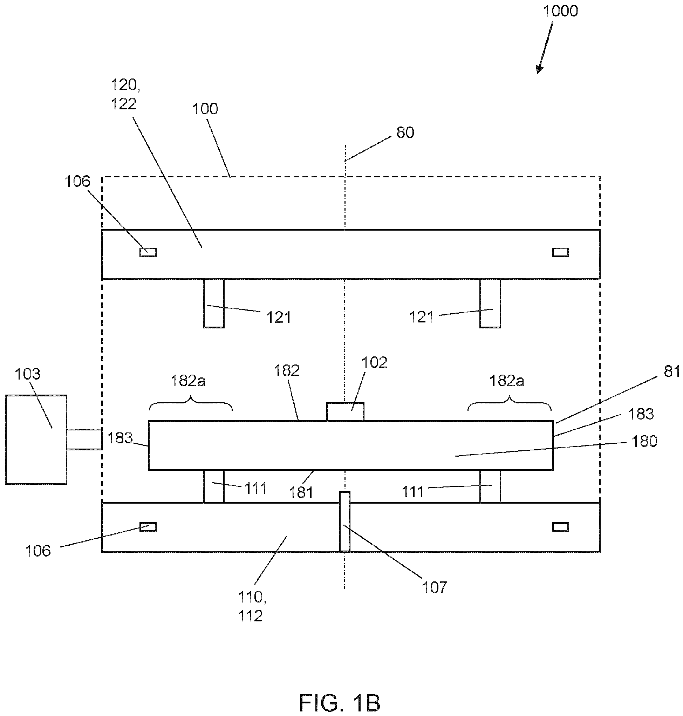

FIG. 1B is a schematic diagram of the molding system of FIG. 1A, with a semiconductor workpiece on a first mold panel of the molding system, according to various aspects.

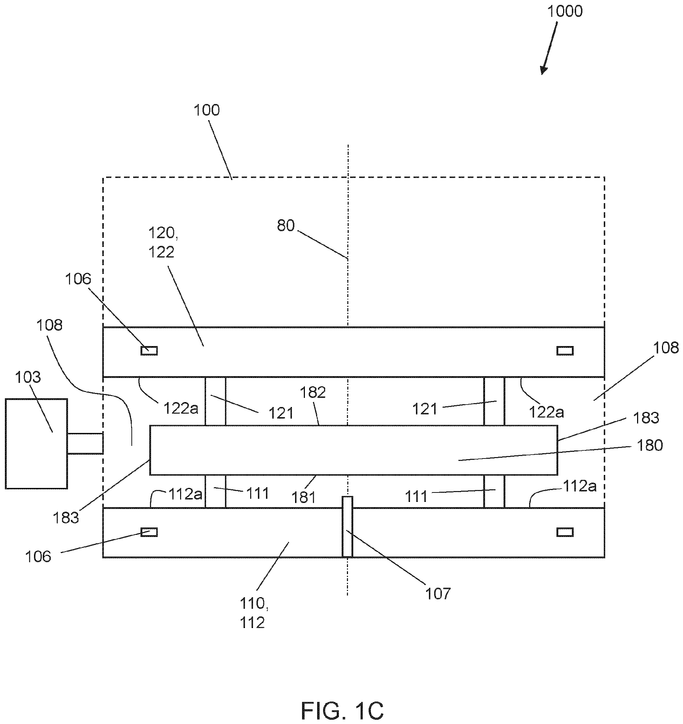

FIG. 1C is a schematic diagram of the molding system of FIG. 1A, with the first mold panel and a second mold panel of the molding system engaged with opposite surfaces of the semiconductor workpiece, according to various aspects.

According to various aspects, there may be provided the molding system 1000.

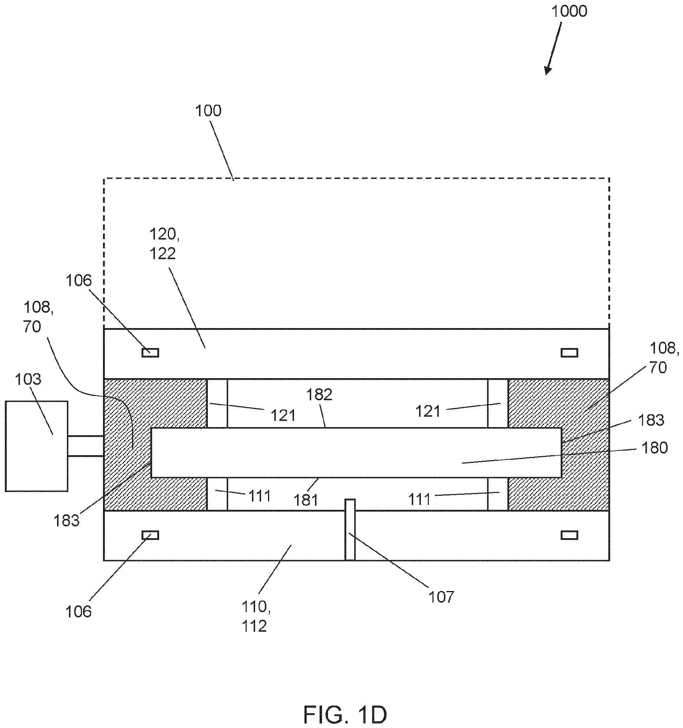

The molding system 1000 may include a molding unit 100. The molding unit 100 may include a first mold panel 110 and a second mold panel 120. The first mold panel 110 and the second mold panel 120 may be configured to define or form or create a mold cavity 108 (see FIG. 1C) for accommodating a mold material 70 (see FIG. 1D). Consequently, according to various aspects, the first mold panel 110 may correspond to or may be a first mold plate of the molding unit 100, while second mold panel 120 may correspond to or may be a second mold plate of the molding unit 100.

According to various aspects, the molding unit 100 may include or define (e.g. designate) a workpiece-holding portion 81 (or area or region), as depicted in FIG. 1A, for accommodating (e.g. placing or disposing) the semiconductor workpiece 180. The workpiece-holding portion 81 may be between the first mold panel 110 and the second mold panel 120. Specifically, the workpiece-holding portion 81 may be in direct connection with and may be on or over a first closed-loop element 111 of the first mold panel 110.

According to various aspects, a position and/or a shape and/or a size (e.g. dimension(s) and volume) of the workpiece-holding portion 81 of the molding unit 100 may correspond to (e.g. may coincide with) and/or may be identical to that of a semiconductor workpiece 180 disposed within the molding unit 100. For example, the workpiece-holding portion 81 may include a base face corresponding to (or that aligns with) a base surface 181 of the semiconductor workpiece 180 within the molding unit 100. Additionally, the workpiece-holding portion 81 may include an upper face corresponding to (or that aligns with) an upper surface 182 of the semiconductor workpiece 180 within the molding unit 100. The workpiece-holding portion 81 may also include one or more side face(s) corresponding to (or that align with) one or more side surface(s) 183 of the semiconductor workpiece 180 within the molding unit 100. These side face(s) of the workpiece-holding portion 81 may connect and/or extend between the base face and the upper face of the workpiece-holding portion 81. Similarly, the side surface(s) 183 of the semiconductor workpiece 180 may connect and/or extend between the base surface 181 and the upper surface 182 of the semiconductor workpiece 180. Consequently, any aspect described herein with reference to a "side face" (or "side face(s)") of a workpiece-holding portion may be applicable to a "side surface" (or "side surface(s)") of a semiconductor workpiece, and vice versa. Likewise, any aspect described herein with reference to a "base face" of a workpiece-holding portion may be applicable to a "base surface" of a semiconductor workpiece, and vice versa. Furthermore, aspects described herein with reference to an "upper face" of a workpiece-holding portion may be applicable to an "upper surface" of a semiconductor workpiece, and vice versa.

According to various aspects, the semiconductor workpiece 180 may include or may be composed (e.g. composed entirely) of glass. For example, the semiconductor workpiece 180 may be a glass panel, a glass layer, a glass substrate, or a glass core, etc. According to various other aspects, the semiconductor workpiece 180 may include or may be composed of any other material or material composite, for example, any one or more of silicon, ceramic, quartz, sapphire, metal or metal alloy (e.g. gold), and/or fiberglass, etc.

According to various aspects, the base surface 181 and the upper surface 182 of the semiconductor workpiece 180 may be planar (e.g. substantially planar or flat). Accordingly, according to various aspects, the base surface 181 and the upper surface 182 of the semiconductor workpiece 180 may be opposite and parallel surfaces.

According to various aspects, depending on a shape of the semiconductor workpiece 180, the semiconductor workpiece 180 may include one or more side surface(s) 183 extending between its base surface 181 and upper surface 182. For example, according to various aspects, the semiconductor workpiece 180 may have a square (or squarish) or rectangle (or rectangular) shape (e.g. having a square or rectangular shaped upper surface 182 and base surface 181, with four side surfaces 183), a circle (or circular) or ellipse shape (e.g. having a circle or ellipse shaped upper surface 182 and base surface 181, with a single curved side surface 183), a triangle (or triangular) shape (e.g. having a triangular shaped upper surface 182 and base surface 181, with three side surfaces 183), or a hexagonal shape (e.g. having a hexagonal shaped upper surface 182 and base surface 181, with eight side surfaces 183), etc. For ease of description herein, various aspects may be described with reference to a "side surface" of a semiconductor workpiece. Nevertheless, it is understood that aspects described with reference to a "side surface" of a semiconductor workpiece are not limited thereto. For example, aspects made with reference to a "side surface" of a semiconductor workpiece may be applicable to multiple (or all) "side surfaces" of a semiconductor workpiece (e.g. of a polygonal shaped semiconductor workpiece) or to a single (or sole or only) "side surface" of a semiconductor workpiece (e.g. of a circle or circular shaped semiconductor workpiece).

According to various aspects, the side surface 183 of the semiconductor workpiece 180 may be planar or flat. For example, the side surface 183 of the semiconductor workpiece 180 may be perpendicular to its base surface 181 and/or its upper surface 182. According to various other aspects, the side surface 183 of the semiconductor workpiece 180 may be wavy, curved (e.g. convex-shaped or concave-shaped), or textured, etc.

According to various aspects, the molding unit 100 of the molding system 1000 may include or may be provided with the semiconductor workpiece 180.

According to various aspects, the molding unit 100 may be configured to form or create or produce a molded part or molded component or molded structure (e.g. cured mold material) around the semiconductor workpiece 180, with the semiconductor workpiece 180 disposed within the workpiece-holding portion 81. Particularly, the molded part may cover and/or surround the semiconductor workpiece 180 along its side surface(s) 183, without contacting a respective central (or middle) region of the base surface 181 and a respective central (or middle) region of the upper surface 182 of the semiconductor workpiece 180.

According to various aspects, with reference to FIG. 1A and FIG. 1B, the first mold panel 110 of the molding unit 100 of the molding system 1000 may include a first closed-loop element 111 (e.g. an annular-shaped protrusion) configured to engage (e.g. contact or abut) a peripheral region 181a (e.g. a closed-loop peripheral region) of the base surface 181 of the semiconductor workpiece 180 (e.g. within the workpiece-holding portion 81). The peripheral region 181a of the base surface 181 of the semiconductor workpiece 180 may herein be referred to as "first peripheral region 181a", and may be a respective region of the base surface 181 surrounding or encircling the central region of the base surface 181 of the semiconductor workpiece 180. According to various aspects, when the first closed-loop element 111 is engaged with the first peripheral region 181a of the base surface 181 of the semiconductor workpiece 180, a first seal (e.g. fluid-tight or impermeable to mold material) may be formed or created between the first closed-loop element 111 and the first peripheral region 181a of the base surface 181 of the semiconductor workpiece 180. The first seal may extend continuously along the first peripheral region 181a of the base surface 181. In other words, the first seal may surround or encircle the central region of the base surface 181. That is, the first seal may be a continuous seal without any breaks, around or surrounding the central region of the base surface 181.

According to various aspects, the first closed-loop element 111 may be protruding or extending (e.g. inwardly) from a main portion 112 (e.g. a main planar or elongate portion) of the first mold panel 110. For example, the first closed-loop element 111 may include or may be a protrusion (e.g. patterned protrusion), a protruding portion, or protruding structure or part, extending or protruding inwardly (e.g. toward the second mold panel 120) from (e.g. away from) an inner or inward-facing surface of the main portion 112 of the first mold panel 110. According to various aspects, the first closed-loop element 111 may be annular or closed-loop in form (that is, defining a central opening). Further, the first closed-loop element 111 may have any shape, for example, a square (or squarish) or rectangle (or rectangular) shape defining a central opening, a circle (or circular) or ellipse shape defining a central opening, a triangle (or triangular) shape defining a central opening, or a hexagonal shape defining a central opening, etc., or any other shape defining a central opening. The central opening may have a same shape as, or a different shape from, the shape of the first closed-loop element 111. According to various aspects, the first closed-loop element 111 may resemble one or more adjoining wall(s) (e.g. a continuous curved wall, or a plurality of straight or linear walls adjoined end-to-end) surrounding and/or defining a central opening. The one or more adjoining wall(s) may be extending from the main portion 112 of the first mold panel 110. Furthermore, based on a geometry of the base surface 181 of the semiconductor workpiece 180 the adjoining wall(s) is configured to engage, the one or more adjoining wall(s) may have a uniform, or a non-uniform, height (e.g. measured axially from the main portion 112) and/or a uniform, or a non-uniform, width (e.g. measured laterally across each wall).

According to various aspects, the molding system 1000 may include a workpiece handling unit 102 configured to manipulate (e.g. adjust) a position and/or location of the semiconductor workpiece 180 relative to the workpiece-holding portion 81 of the molding unit 100. For example, the workpiece handling unit 102 may be configured to handle (e.g. pick or hold) the semiconductor workpiece 180, transport the semiconductor workpiece 180 from a first location (e.g. from an external tray, such as a Joint Electron Device Engineering Council (JEDEC) tray, or external container which temporarily contains the semiconductor workpiece 180) to a second or other location (e.g. to the molding unit 100 itself), and dispose (e.g. place) the semiconductor workpiece 180 onto a predetermined location (e.g. within the workpiece-holding portion 81 or onto the first closed-loop element 111 of the first mold panel 110 of the molding unit 100). As some examples, the workpiece handling unit 102 may include at least one manipulator, at least one pick and place robot, at least one robotic arm, and/or at least one robotic finger chuck, and/or may employ vacuum suction, and/or magnets, etc. According to various aspects, the workpiece handling unit 102 may be operated by mechanical, electrical, pneumatic, and/or electromagnetic means. According to various aspects, the workpiece handling unit 102 may include (e.g. further include) at least one sensor (e.g. proximity sensor) and/or machine vision configured to recognize or map semiconductor workpiece 180 location(s). According to various aspects, the workpiece handling unit 102 may include (e.g. further include) a workpiece-alignment mechanism, which may include, for example, fiducial-based pneumatic-driven micro-positioning, self-alignment mechanisms utilizing guide pin(s) or guide roller(s), and/or a mechanical actuator configured to push (or move) the semiconductor workpiece 180.

According to various aspects, with reference to FIG. 1B and FIG. 1C, the second mold panel 120 of the molding unit 100 may include a second closed-loop element 121 (e.g. annular-shaped protrusion) configured to engage (e.g. contact or abut) a peripheral region 182a (e.g. a closed-loop peripheral region) of the upper surface 182 of the semiconductor workpiece 180 (e.g. within the workpiece-holding portion 81). The peripheral region 182a of the upper surface 182 of the semiconductor workpiece 180 may herein be referred to as "second peripheral region 182a", and may be a respective region of the upper surface 182 surrounding or encircling the central region of the upper surface 182 of the semiconductor workpiece 180. According to various aspects, when the second closed-loop element 121 is engaged with the second peripheral region 182a of the upper surface 182 of the semiconductor workpiece 180, a second seal (e.g. fluid-tight or impermeable to mold material) may be formed or created between the second closed-loop element 121 and the second peripheral region 182a of the upper surface 182 of the semiconductor workpiece 180. The second seal may extend continuously along the second peripheral region 182a of the upper surface 182. In other words, the second seal may surround or encircle the central region of the upper surface 182. That is, the second seal may be a continuous second seal without any breaks, around or surrounding the central region of the upper surface 182.

According to various aspects, the second closed-loop element 121 may be protruding or extending (e.g. inwardly) from a main portion 122 (e.g. a main planar or elongate portion) of the second mold panel 120. For example, the second closed-loop element 121 may include or may be a protrusion (e.g. patterned protrusion), a protruding portion, or protruding structure or part, extending or protruding inwardly (e.g. toward the first mold panel 110) from (e.g. away from) an inner or inward-facing surface of the main portion 122 of the second mold panel 120. According to various aspects, the second closed-loop element 121 may be annular or closed-loop in form (that is, defining a central opening). Further, the second closed-loop element 121 may have any shape, for example, a square (or squarish) or rectangle (or rectangular) shape defining a central opening, a circle (or circular) or ellipse shape defining a central opening, a triangular shape defining a central opening, or a hexagonal shape defining a central opening, etc., or any other shape defining a central opening. The central opening may have a same shape as, or a different shape from, the shape of the second closed-loop element 121. According to various aspects, the second closed-loop element 121 may resemble one or more adjoining wall(s) (e.g. a continuous curved wall, or a plurality of straight or linear walls adjoined end-to-end) surrounding and/or defining a central opening. The one or more adjoining wall(s) may be extending from the main portion 122 of the second mold panel 120. Furthermore, based on a geometry of the upper surface 182 of the semiconductor workpiece 180 the adjoining wall(s) is configured to engage, the one or more adjoining wall(s) may have a uniform, or a non-uniform, height (e.g. measured axially from the main portion 122) and/or a uniform, or a non-uniform, width (e.g. measured laterally across each wall).

According to various aspects, the second closed-loop element 121 may have an identical shape and/or identical dimension(s) (e.g. height and/or width) as the first closed-loop element 111. According to various other aspects, the second closed-loop element 121 may have a different shape and/or different dimension(s) from the first closed-loop element 111.

According to various aspects, the second closed-loop element 121 may be opposing (e.g. facing or directed towards) the first closed-loop element 111, within the molding unit 100 of the molding system 1000. Particularly, according to various aspects, the first closed-loop element 111 and the second closed-loop element 121 may be aligned (e.g. vertically-aligned and/or directly facing each other), within the molding unit 100. According to various aspects, the first closed-loop element 111 and the second closed-loop element 121 may be of similar shapes and/or sizes while being aligned to a central alignment axis (e.g. a reference alignment axis), or may be of different shapes and/or sizes while being aligned to the central alignment axis. According to various other aspects, the second closed-loop element 121 on the second mold panel 120 may be offset from the first closed-loop element 111 on the first mold panel 110.

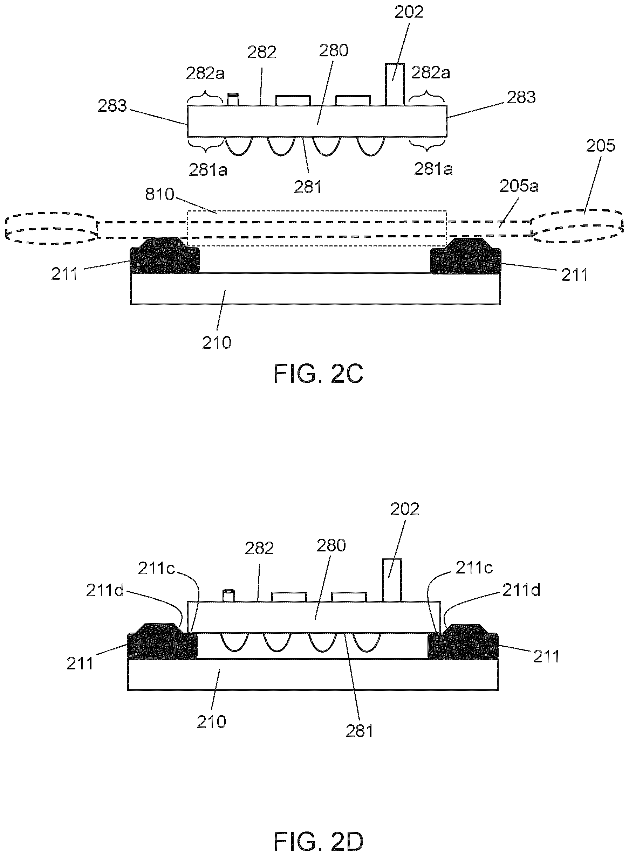

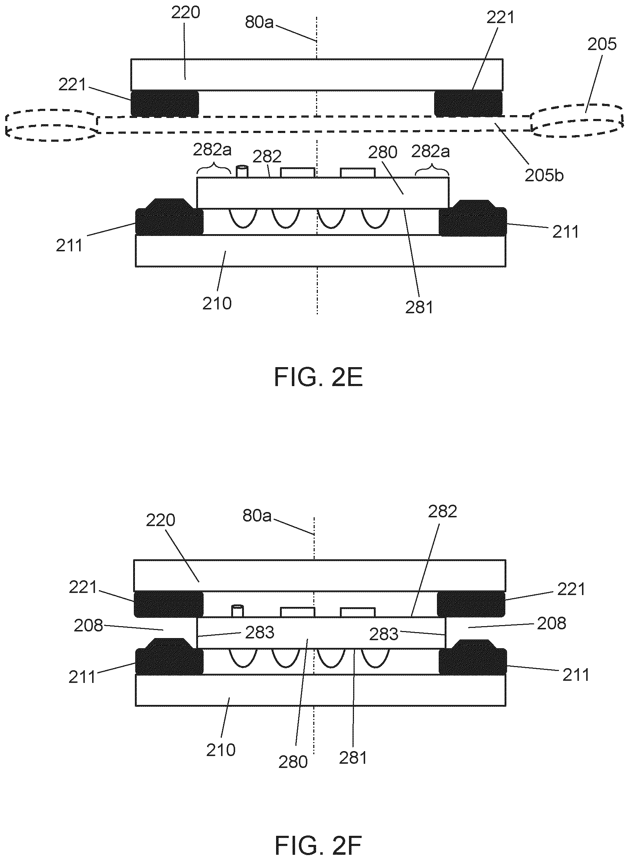

According to various aspects, the molding system 1000 may include (e.g. further include) a film dispensing unit (see, for example, reference 205 in FIG. 2C and FIG. 2E) configured to dispense any one or both of a first layer of film (see, for example, reference 205a in FIG. 2C) over the first closed-loop element 111 and/or a second layer of film (see, for example, reference 205b in FIG. 2E) over the second closed-loop element 121. For example, according to various aspects, the film dispensing unit may include a dispensing sub-unit (e.g. which may include at least one roller) configured to dispense the first layer of film and/or the second layer of film. The film dispensing unit may further include a receiving sub-unit (e.g. which may include at least one other roller) configured to collect or gather "used" portions of the first layer of film and/or of the second layer of film. For instance, a first end of the first layer of film (or the second layer of film) may be coupled (e.g. secured or attached) to the dispensing sub-unit, while an opposite second end of the first layer of film (or the second layer of film) may be coupled to the receiving sub-unit. The dispensing sub-unit and the receiving sub-unit may be synchronized to dispense a "new" portion of the first layer of film (or the second layer of film) from the dispensing sub-unit and to gather a "used" portion of the first layer of film (or the second layer of film) by the receiving sub-unit, concurrently.

According to various aspects, the molding system 1000 may include (e.g. further include) the first layer of film over (or that covers, e.g. entirely covers or encases) the first closed-loop element 111. The first layer of film may include or may be composed (e.g. composed entirely) of a conformable material such that the first layer of film may be capable of conforming to a shape or contour of the first closed-loop element 111 to cover the first closed-loop element 111. According to various aspects, when the first closed-loop element 111 engages the first peripheral region 181a of the base surface 181 of the semiconductor workpiece 180, the first layer of film may be sandwiched between (e.g. directly between) the first closed-loop element 111 and the first peripheral region 181a of the base surface 181 of the semiconductor workpiece 180, with opposite surfaces of the first layer of film in contact (e.g. in direct physical contact) with the first closed-loop element 111 and the first peripheral region 181a of the base surface 181 of the semiconductor workpiece 180. According to various aspects, the conformable property of the first layer of film may adequately fill any gap(s) between the first closed-loop element 111 and the first peripheral region 181a of the base surface 181 of the semiconductor workpiece 180 (e.g. which may arise due to any uneven surface(s) of the first closed-loop element 111 and/or the base surface 181 of the semiconductor workpiece 180), thereby ensuring that the first seal (e.g. fluid-tight or impermeable to mold material) may be (properly) formed between the first closed-loop element 111 and the first peripheral region 181a of the base surface 181 of the semiconductor workpiece 180, when they are engaged.

According to various aspects, the first layer of film may, additionally, have a non-stick property to serve as a release liner or release film.

As some non-limiting examples, the first layer of film may include or may be composed of a polymer or plastic (e.g. Polyethylene terephthalate (PET), Polytetrafluoroethylene (PTFE), or any suitable fluoropolymer material with conformable and/or non-stick properties), or any other type of material or material composite with conformable and/or non-stick properties.

According to various aspects, the molding system 1000 may include (e.g. further include) the second layer of film over (or that covers, e.g. entirely covers or encases) the second closed-loop element 121. The second layer of film may include or may be composed (e.g. composed entirely) of a conformable material such that the second layer of film may be capable of conforming to a shape or contour of the second closed-loop element 121 to cover the second closed-loop element 121. According to various aspects, when the second closed-loop element 121 engages the second peripheral region 182a of the upper surface 182 of the semiconductor workpiece 180, the second layer of film may be sandwiched between (e.g. directly between) the second closed-loop element 121 and the second peripheral region 182a of the upper surface 182 of the semiconductor workpiece 180, with opposite surfaces of the second layer of film in contact (e.g. in direct physical contact) with the second closed-loop element 121 and the second peripheral region 182a of the upper surface 182 of the semiconductor workpiece 180. According to various aspects, the conformable property of the second layer of film may adequately fill any gap(s) between the second closed-loop element 121 and the second peripheral region 182a of the upper surface 182 of the semiconductor workpiece 180 (e.g. which may arise due to any uneven surface(s) of the second closed-loop element 121 and/or the upper surface 182 of the semiconductor workpiece 180), thereby ensuring that the second seal (e.g. fluid-tight or impermeable to mold material) may be (properly) formed between the second closed-loop element 121 and the second peripheral region 182a of the upper surface 182 of the semiconductor workpiece 180, when they are engaged.

According to various aspects, the second layer of film may, additionally, have a non-stick property to serve as a release liner or release film.

As some non-limiting examples, the second layer of film may include or may be composed of a polymer or plastic (e.g. PET, PTFE, or any suitable fluoropolymer material with conformable and/or non-stick properties), or any other type of material or material composite with conformable and/or non-stick properties.

According to various aspects, the second mold panel 120 may be movable relative to the first mold panel 110, along a movement axis 80 (e.g. a straight or linear reference axis) that extends across the first mold panel 110 and the second mold panel 120, as depicted in FIG. 1B and FIG. 1C. According to various aspects, the second mold panel 120 may be moved towards the first mold panel 110, along the movement axis 80, until the second closed-loop element 121 engages with the second peripheral region 182a of the upper surface 182 of the semiconductor workpiece 180 (e.g. within the workpiece-holding portion 81), or may be moved away from the first mold panel 110. According to various aspects, the second mold panel 120 may be configured (e.g. programmed) to be moved toward the first mold panel 110 to a maximum allowable extent (or "lower limit") (e.g. as specified in a machine recipe), which ensures that the second mold panel 120 and the first mold panel 110, or the first closed-loop element 111 and the second closed-loop element 121 thereof, create or define a spacing or a gap that accommodates the semiconductor workpiece 180. For example, a size (e.g. height) of the spacing or gap (corresponding to the "lower limit") may be larger than or equal (e.g. substantially equal) to a thickness (or height) of the semiconductor workpiece 180 (or of the workpiece-holding portion 81), to prevent any excessive compressive force exerted by the first closed-loop element 111 and the second closed-loop element 121 on the semiconductor workpiece 180.

With reference to FIG. 1C, according to various aspects, the first mold panel 110 and the second mold panel 120 may be configured (e.g. shaped) to define or form a mold cavity 108 to accommodate a mold material 70 (see FIG. 1D) for forming a "molded part" around the semiconductor workpiece 180. The mold cavity 108 may be configured (e.g. shaped) to surround the semiconductor workpiece 180 (or the workpiece-holding portion 81) along and/or around its peripheral or side surface 183 (e.g. all of its side surface(s)), without extending or encroaching to the central regions of both the base surface 181 and the upper surface 182 of the semiconductor workpiece 180 (e.g. within the workpiece-holding portion 81). For example, when the first closed-loop element 111 and the second closed-loop element 121 are respectively engaged (or connected or interfaced) with the first peripheral region 181a of the base surface 181 and the second peripheral region 182a of the upper surface 182 of the semiconductor workpiece 180 (or peripheral regions of the base face and the upper face of the workpiece-holding portion 81), the mold cavity 108 may be bounded by (e.g. directly bounded or defined by and/or in fluidic communication with) the side surface 183 (e.g. all side surface(s)) of the semiconductor workpiece 180 (or side face(s) of the workpiece-holding portion 81). Accordingly, mold material 70 delivered into the mold cavity 108 may come into contact with and/or may cover and/or coat the side surface 183 (e.g. at least a portion of the side surface(s)) of the semiconductor workpiece 180 (e.g. within the workpiece-holding portion 81). Moreover, the mold cavity 108 may be separated from (e.g. isolated or disconnected from fluidic communication with) the central regions of both the base surface 181 and the upper surface 182 of the semiconductor workpiece 180 within the workpiece-holding portion 81 (or separated from the central regions of the base face and the upper face of the workpiece-holding portion 81).

According to various aspects, the first closed-loop element 111 and the second closed-loop element 121 may respectively engage the peripheral regions 181a and 182a of the base surface 181 and the upper surface 182 of the semiconductor workpiece 180 (e.g. within the workpiece-holding portion 81) to form the first seal and the second seal on or at the peripheral regions 181a and 182a of the base surface 181 and the upper surface 182 of the semiconductor workpiece 180. The first seal and the second seal formed may separate or isolate the mold cavity 108 from the central regions of both the base surface 181 and the upper surface 182 of the semiconductor workpiece 180. That is, when the first closed-loop element 111 is engaged with the first peripheral region 181a of the base surface 181 of the semiconductor workpiece 180 and when the second closed-loop element 121 is engaged with the second peripheral region 182a of the upper surface 182 of the semiconductor workpiece 180, the first seal formed and the second seal formed may respectively prevent mold material 70 (e.g. in liquid or molten form) within the mold cavity 108 from reaching (e.g. entering or flowing to) the central region of the base surface 181 of the semiconductor workpiece 180 and to the central region of the upper surface 182 of the semiconductor workpiece 180.

According to various aspects, when the first mold panel 110 and the second mold panel 120 engage the semiconductor workpiece 180 to form the first seal and the second seal respectively, the first mold panel 110 may form a first fluid-tight enclosure around the central region of the base surface 181 of the semiconductor workpiece 180 as well as a second fluid-tight enclosure around the central region of the upper surface 182 of the semiconductor workpiece 180. According to various aspects, it is not possible for any mold material 70 to infiltrate or enter the first fluid-tight enclosure and the second fluid-tight enclosure.

With reference to FIG. 1C, according to various aspects, the mold cavity 108 may further be bounded (e.g. directly bounded or defined by) a surface of the first closed-loop element 111 which defines the shape or contour of the first closed-loop element 111 and that faces away from the central region of the base surface 181 of the semiconductor workpiece 180. Further, the mold cavity 108 may be bounded (e.g. directly bounded or defined by) a surface of the second closed-loop element 121 which defines the shape or contour of the second closed-loop element 121 and which faces away from the central region of the upper surface 182 of the semiconductor workpiece 180.

Additionally, as depicted in FIG. 1C, the mold cavity 108 may be bounded by (e.g. directly bounded or defined by) a first inner or inward-facing surface 112a of the main portion 112 of the first mold panel 110 that is adjacent (e.g. immediately adjacent) and/or adjoining the first closed-loop element 111 (at an outer side surface of the first closed-loop element 111) as well as bounded by a second inner or inward-facing surface 122a of the main portion 122 of the second mold panel 120 that is adjacent (e.g. immediately adjacent) and/or adjoining the second closed-loop element 121 (at an outer side surface of the second closed-loop element 121). Said first inner surface 112a of the first mold panel 110 and said second inner surface 122a of the second mold panel 120 may be opposing (e.g. facing or directed toward) each other.

FIG. 1D is a schematic diagram depicting mold material within the mold cavity of the molding unit of the molding system of FIG. 1A, according to various aspects.

As depicted in FIG. 1D, according to various aspects, the molding system 1000 may include (e.g. further include) a material delivery unit 103 configured to be in fluidic communication with or fluidic connection to the mold cavity 108 (e.g. when the first closed-loop element 111 and the second closed-loop element 121 engages the semiconductor workpiece 180 or is connected to the workpiece-holding portion 81) to deliver a mold material 70 into the mold cavity 108. As some non-limiting examples, the material delivery unit 103 may include a plunger (e.g. ram or press ram) or a rotatable screw (e.g. injection screw).

According to various aspects, the mold material 70 may include or may be a curable mold material composed of, for example, a polymer, an epoxy or epoxy mold compound, silicone, polyimide, polyethersulfone, or polyacrylate, thermoplastic (e.g. moldable thermoplastic melt), thermoset resin (e.g. curable thermoset resin), etc., or any other suitable mold material. Furthermore, according to various aspects, the mold material 70 may include micro or nano-sized inorganic particulate fillers, or a mixture of fibers and particulate fillers.

According to various aspects, the mold material 70 may be configured to be capable of adhering (e.g. have strong adhesion) to the side surface 183 of the semiconductor workpiece 180 (e.g. a glass semiconductor workpiece 180) and/or capable of curing quickly (e.g. within minutes). Moreover, the molding material may include any one or more of the following properties (e.g. after it is cured): heat resistance (e.g. high heat resistance), creep resistance, dimensional stability, flame retardancy, moisture resistance, high hardness, high modulus, high tensile strength, high adhesion strength, high transparency or translucence, electrical insulation, high toughness, and/or high impact resistance (e.g. so that it may be capable of safeguarding the semiconductor workpiece 180 from mechanical impact), etc. According to various aspects, at least one or more properties of the mold material 70 may be selected to enhance performance of a package (e.g. chip package which includes the semiconductor workpiece 180), in addition to providing protection to the semiconductor workpiece 180 itself.

According to various aspects, the molding system 1000 may include (e.g. optionally or further include) a temperature control unit 106 configured to adjust a temperature of any one or more or all other component(s) or feature(s) of the molding system 1000. For example, the temperature control unit 106 may include one or more heating elements or preheaters (e.g. regulated by electricity, and which may be embedded within the first mold panel 110 or a first platen, and/or within the second mold panel 120 or a second platen). The temperature control unit 106 may be configured to raise (or increase) a temperature of one or more fluid channel(s) (e.g. runner(s)) between the material delivery unit 103 and the mold cavity 108, to enhance flowability of mold material 70 along the fluid channel(s) from the material delivery unit 103 to the mold cavity 108. As a further example, the temperature control unit 106 may be configured to raise (or increase) a temperature of the first mold panel 110 and/or the second mold panel 120, to enhance flowability of the mold material 70 within the mold cavity 108 and/or to maintain the mold material 70 in a liquid or molten state within the mold cavity 108 before a curing process is initiated. Additionally, according to various aspects, the temperature control unit 106 may be configured to heat or raise a temperature of the semiconductor workpiece 180.

According to various aspects, mold material 70 that is delivered or introduced into the mold cavity 108 (e.g. until it fills the mold cavity 108) may undergo a curing process which results in hardening or solidification of the mold material 70. As a result of this curing process, the cured mold material may take on a form that is either rigid, semi-rigid or soft in nature. The cured mold material 70 forms (in other words, may be) the "molded part" (or molded component or molded structure) that surrounds the semiconductor workpiece 180. The molded part (i.e. cured mold material 70) may adhere or attach to the side surface 183 (e.g. all side surface(s)) of the semiconductor workpiece 180 and may cover the side surface 183 (or at least a portion thereof) of the semiconductor workpiece 180. According to various aspects, the molded part (i.e. cured mold material 70) may not come into contact with the central regions of both the base surface 181 and the upper surface 182 of the semiconductor workpiece 180. In other words, the central regions of both the base surface 181 and the upper surface 182 of the semiconductor workpiece 180 may be free or devoid of mold material 70 (or the molded part).

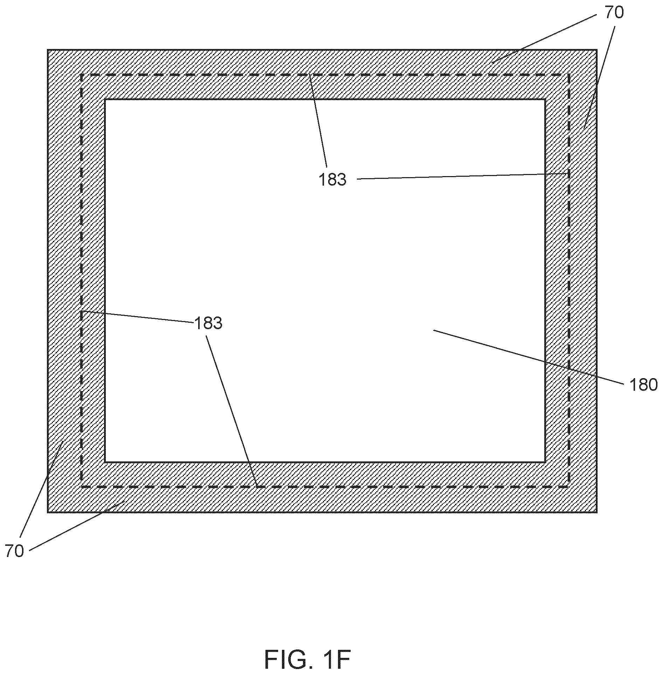

According to aspects, with the molded part (i.e. cured mold material 70) surrounding the semiconductor workpiece 180 along its peripheral (e.g. all its side surface(s) 183) (see FIG. 1F), the molded part may serve or function as a protector or guard or shield or protective layer capable of preventing or mitigating risk of a defect (e.g. a crack) from occurring at the side surface 183 of the semiconductor workpiece 180 (e.g. during subsequent handling of the semiconductor workpiece 180). Additionally, the molded part (i.e. cured mold material 70) surrounding the semiconductor workpiece 180 may also be capable of averting core splitting during thermal cycling processes. Accordingly, the molded part (i.e. cured mold material 70) around the semiconductor workpiece 180 may serve to protect the side surface 183 of the semiconductor workpiece 180.

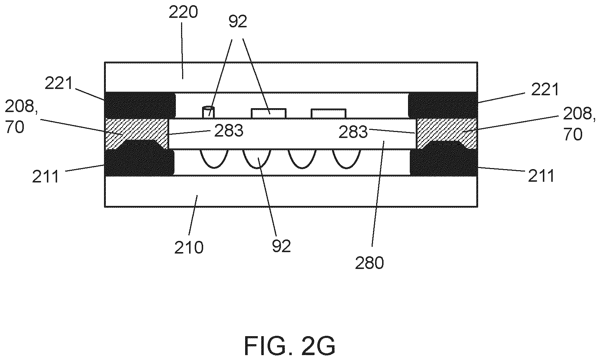

On the other hand, the central regions of both the base surface 181 and the upper surface 182 of the semiconductor workpiece 180, which may be devoid of any mold material 70, may serve as mounting points for one or more other components (e.g. chips, dies, etc.) (see, for example, reference 92 in FIG. 2G).

Accordingly, according to various aspects, the central regions of the base surface 181 and the upper surface 182 of the semiconductor workpiece 180 may correspond to "active areas" or "center active areas" of the semiconductor workpiece 180, while the peripheral regions 181a and 182a of the base surface 181 and the upper surface 182 of the semiconductor workpiece 180 which may come into contact or engagement with the first closed-loop element 111 of the first mold panel 110 and the second closed-loop element 121 of the second mold panel 120 may correspond to "keep out zones" of the semiconductor workpiece 180.

According to various aspects, after the curing process is completed, the second mold panel 120 may be moved away from the first mold panel 110, for example, for facilitating removal or ejection of the semiconductor workpiece 180 from the workpiece-holding portion 81 of the molding unit 100.

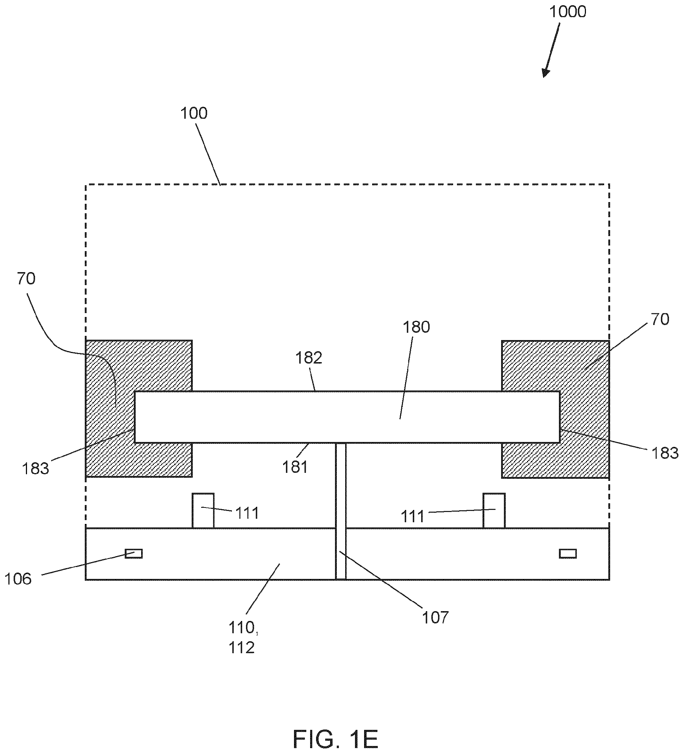

FIG. 1E is a schematic diagram of the molding system of FIG. 1A, with an ejector unit of the molding system in operation, according to various aspects.

FIG. 1F is a schematic top view of the semiconductor workpiece with the molded part surrounding the semiconductor workpiece, according to various aspects.

With reference to FIG. 1E, according to various aspects, the molding unit 100 of the molding system 1000 may include (e.g. further include) an ejector unit 107 (e.g. which may include ejector pin(s)) configured to move (e.g. push or eject) the semiconductor workpiece 180 with the molded part (i.e. cured mold material 70) away from the workpiece-holding portion 81 or away from the first mold panel 110 of the molding unit 100.

Additionally, according to various aspects, the ejector unit 107 may be configured to remove cull and sever a sprue (e.g. sprue material) or a gate (e.g. gate material). To illustrate, the ejector unit 107 may incorporate one or more sharp-edged (ejectable) pins or cutters which may be mobilized to dislodge a sprue or a gate (e.g. sprue-trim or gate trim) and/or remove excess cured mold material 70 (e.g. cull) as required. Accordingly, according to various aspects, the one or more sharp-edged pins or cutters of the ejector unit 107 may function as a degater of the molding system 1000.

According to various other aspects, in lieu of an ejector unit 107, the workpiece handling unit 102 (e.g. manipulator, robotic arm, etc.) of the molding unit 100 may remove or move (e.g. pick and carry) the semiconductor workpiece 180 with the molded part (i.e. cured mold material 70) away from the workpiece-holding portion 81 (e.g. to an external tray, such as the JEDEC tray, or container).

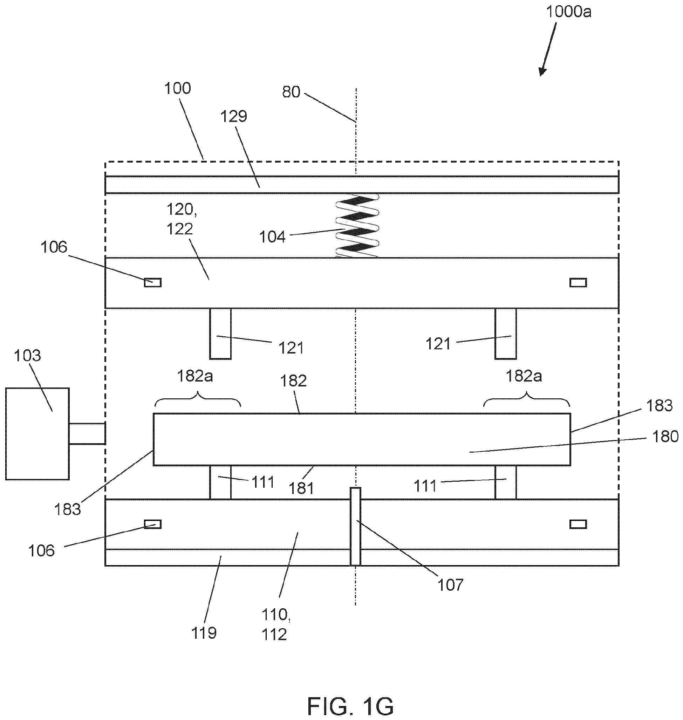

FIG. 1G is a schematic diagram of a molding system, which includes a suspension assembly, according to various aspects.

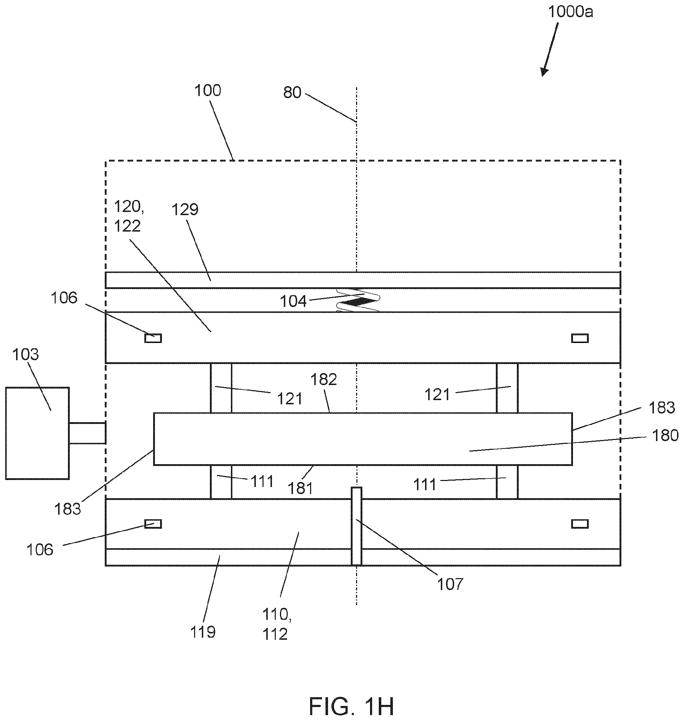

FIG. 1H is a schematic diagram depicting the suspension assembly of FIG. 1G in operation, according to various aspects.

According to various aspects, there may be provided the molding system 1000a. According to various aspects, the molding system 1000a may contain any one or more or all the features and/or limitations of the molding system 1000 of FIG. 1A. In the following, the molding system 1000a is described with like reference characters generally referring to the same or corresponding parts/features of the molding system 1000 of FIG. 1A. The description of the parts/features made with respect to the molding system 1000a may also be applicable with respect to the molding system 1000, and vice versa.

According to various aspects, the molding system 1000a may further include the following additional features and/or limitations.

According to various aspects, the molding unit 100 of the molding system 1000a may include a first platen 119 configured to be coupled to the first mold panel 110 as well as a second platen 129 configured to be coupled to the second mold panel 120.

According to various aspects, either one of the first platen 119 or the second platen 129 may be movable along a movement axis 80 that extends across the first platen 119 and the second platen 129 (or across the first mold panel 110 and the second mold panel 120), while the other one of the first platen 119 of the second platen 129 may be configured as a stationary platen (or fixed platen). According to various other aspects, both the first platen 119 and the second platen 129 may be configured to be movable (e.g. independently movable) relative to each other along the movement axis 80. According to various aspects, as some non-limiting examples, movement of either one or both of the first platen 119 and/or the second platen 129 may be controlled by a hydraulic mechanism (e.g. hydraulic cylinders), pneumatics, an electromechanical mechanism, or any other mechanism.

According to various aspects, the first platen 119 and/or the second platen 129 may be configured (e.g. programmed) to move toward each other until a maximum allowable extent (or "lower limit") (e.g. as specified in a machine recipe), which ensures that the first mold panel 110 (coupled to the first platen 119) and the second mold panel 120 (coupled to the second platen 129), or the first closed-loop element 111 and the second closed-loop element 121 thereof, provide or define a spacing or a gap that accommodates the semiconductor workpiece 180. For example, a size (e.g. height) of the spacing or gap (corresponding to the "lower limit") may be larger than or equal (e.g. substantially equal) to a thickness (or height) of the semiconductor workpiece 180 (or of the workpiece-holding portion 81 of the molding unit 100), to prevent any excessive compressive force exerted by the first closed-loop element 111 and the second closed-loop element 121 on the semiconductor workpiece 180.

As depicted in FIG. 1G, according to various aspects, the molding unit 100 of the molding system 1000a may include (e.g. further include) the suspension assembly 104 disposed between the second mold panel 120 and the second platen 129. The suspension assembly 104 may be configured to suspend the second mold panel 120 relative to the second platen 129. For example, the suspension assembly 104 may include a biasing element (e.g. one or more spring(s)) disposed between the second mold panel 120 and the second platen 129. The biasing element may be configured to bias the second mold panel 120 away from the second platen 129. In particular, the suspension assembly 104 may serve to mitigate or prevent excessive compressive force exerted by the second closed-loop element 121 on the semiconductor workpiece 180 as the second mold panel 120 (coupled to the movable platen) is moved toward the first mold panel 110. Moreover, according to various aspects, the suspension assembly 104 may allow the second mold panel 120 to be rotatable or capable of tilt relative to the second platen 129. This may enhance alignment and engagement of the second closed-loop element 121 on the upper surface 182 of the semiconductor workpiece 180 to form the second seal.

According to various other aspects (not shown), the molding unit 100 of the molding system 1000a may include (e.g. optionally or further include) a further suspension assembly disposed between the first mold panel 110 and the first platen 119. According to various other aspects, the further suspension assembly may be configured similarly as the suspension assembly 104.

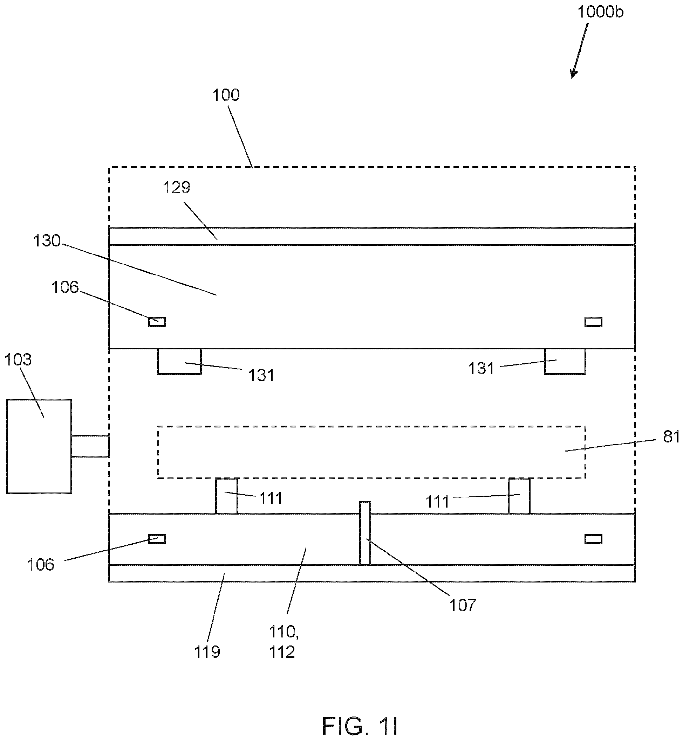

FIG. 1I is a schematic diagram of a molding system, which includes an auxiliary mold panel, according to various aspects.

According to various aspects, there may be provided the molding system 1000b. According to various aspects, the molding system 1000b may contain any one or more or all the features and/or limitations of the molding system 1000 of FIG. 1A and/or the molding system 1000a of FIG. 1G. In the following, the molding system 1000b is described with like reference characters generally referring to the same or corresponding parts/features of the molding system 1000 of FIG. 1A and/or the molding system 1000a of FIG. 1G. The description of the parts/features made with respect to the molding system 1000b may also be applicable with respect to the molding system 1000 and/or 1000a, and vice versa.

According to various aspects, the molding system 1000b may further include the following additional features and/or limitations.

According to various aspects, the molding unit 100 of the molding system 1000b may include an auxiliary mold panel 130 configured to be attachable (or detachably coupled) to the second platen 129.

For example, the auxiliary mold panel 130 may be configured to be attached or coupled to the second platen 129 in a manner such that the auxiliary mold panel 130 covers or is over the second mold panel 120 on the second platen 129.

Alternatively, the second mold panel 120 may be detached from the second platen 129, before the auxiliary mold panel 130 is attached or coupled to the second platen 129.

According to various aspects, the auxiliary mold panel 130 may include an auxiliary closed-loop element 131 which differs from the second closed-loop element 121 of the second panel. For example, the auxiliary closed-loop element 131 may have a different shape and/or size (e.g. height and/or width) from the second closed-loop element 121 of the second panel.

According to various aspects, the auxiliary mold panel 130 may also be configured to be attachable (or detachably coupled) to the first platen 119.

For example, the auxiliary mold panel 130 may be configured to be attached or coupled to the first platen 119 in a manner such that the auxiliary mold panel 130 covers or is over the first mold panel 110 on the first platen 119.

Alternatively, the first mold panel 110 may be detached from the first platen 119, before the auxiliary mold panel 130 is attached or coupled to the first platen 119.

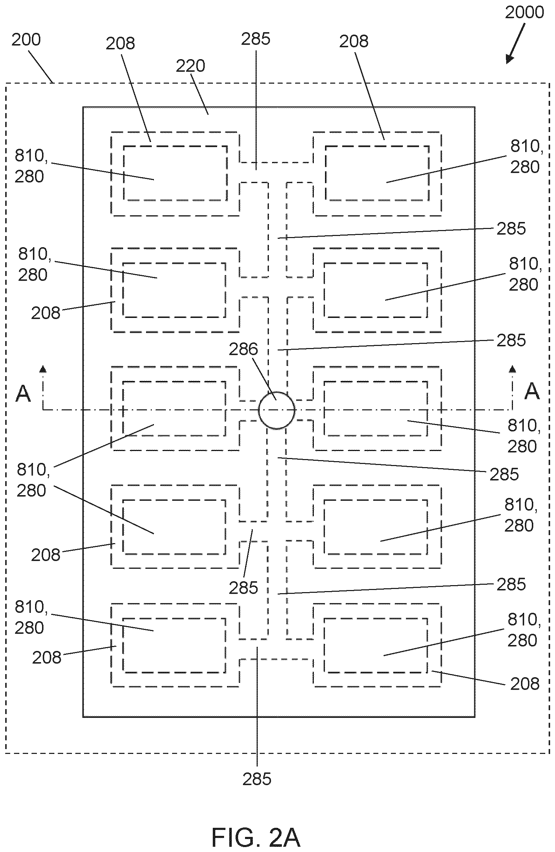

FIG. 2A is a schematic top view of a molding system which includes a molding unit with a plurality of mold cavities, according to various aspects.

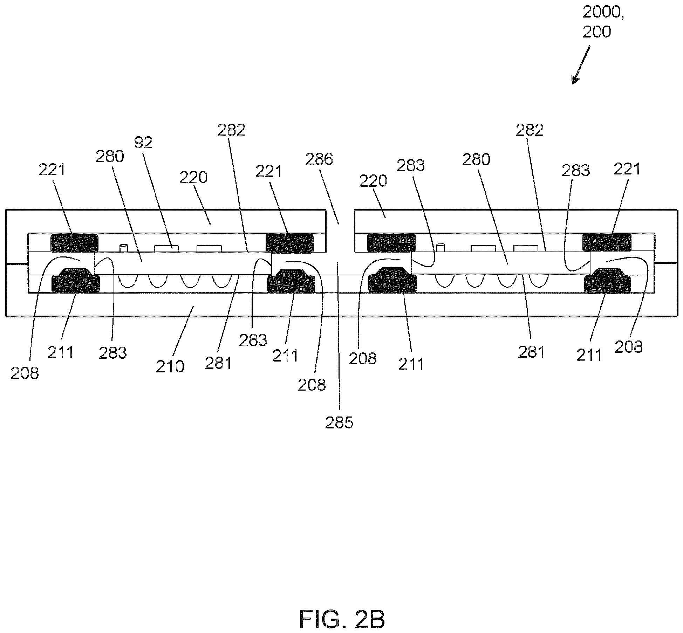

FIG. 2B is a cross-sectional view of the molding unit of FIG. 2A, taken along line A-A, according to various aspects.

According to various aspects, there may be provided the molding system 2000. According to various aspects, the molding system 2000 may contain any one or more or all the features and/or limitations of the molding system 1000 of FIG. 1A and/or the molding system 1000a of FIG. 1G and/or the molding system 1000b of FIG. 1I. In the following, the molding system 2000 is described with like reference characters generally referring to the same or corresponding parts/features of the molding system 1000 of FIG. 1A and/or the molding system 1000a of FIG. 1G and/or the molding system 1000b of FIG. 1I. The description of the parts/features made with respect to the molding system 2000 may also be applicable with respect to the molding system 1000 and/or 1000a and/or 1000b, and vice versa.

According to various aspects, with reference to FIG. 1A and FIG. 1B, the molding unit 200 of the molding system 2000 may include a first mold panel 210 and a second mold panel 220. The first mold panel 210 and the second mold panel 220 may be configured to define or form a plurality of interconnected mold cavities 208 for accommodating a mold material 70 (see FIG. 2G). Consequently, according to various aspects, the first mold panel 210 may correspond to or may be a first mold plate of the molding unit 200, while the second mold panel 220 may correspond to or may be a second mold plate of the molding unit 200.

According to various aspects, the molding unit 200 may include or define (e.g. designate) a plurality of workpiece-holding portions 810 (e.g. areas or regions) (see FIG. 2C) for respectively accommodating (e.g. placing) the plurality of semiconductor workpieces 280. The plurality of workpiece-holding portions 810 may be between the first mold panel 210 and the second mold panel 220. As an example, according to various aspects, at least some or all of the plurality of workpiece-holding portions 810 may be laterally-aligned (e.g. side-by-side along a same plane) with one another. As another example (not shown), according to various other aspects, at least some or all of the plurality of workpiece-holding portions 810 may be axially-aligned (e.g. stacked) with respect to one another.

According to various aspects, when the first mold panel 210 and the second mold panel 220 are brought toward each other or brought together, the first mold panel 210 and the second mold panel 220 may define or form the plurality of interconnected mold cavities 208. Referring to FIG. 2A and FIG. 2B, each mold cavity 208 of the plurality of mold cavities 208 may be configured or shaped or arranged to surround a respective semiconductor workpiece 280 (or workpiece-holding portion 810), along and/or around a side surface 283 of the semiconductor workpiece 280 (or a side face of the workpiece-holding portion 810).

According to various aspects, the plurality of mold cavities 208 may be interconnected, in other words, in fluidic communication or connection to one another. In particular, the molding unit 200 may include one or more fluid channel(s) 285 (e.g. runner(s)) which fluidly connect (or interconnect) the plurality of mold cavities 208. As an example, the fluid channel(s) 285 may be defined or formed by corresponding grooves on the inner or inward-facing surfaces of both the first mold panel 210 and the second mold panel 220 (e.g. when the first mold panel 210 and the second mold panel 220 are brought together).

Referring to FIG. 2A and FIG. 2B, the molding unit 200 may further include an inlet channel 286 (e.g. sprue) for introducing or delivering mold material 70 to the fluid channel(s) 285 and, in turn, to the plurality of mold cavities 208 connected to the fluid channel(s) 285. As an example, as depicted in FIG. 2B, the inlet channel 286 may be formed on the second mold panel 220. According to various other aspects (not shown), the inlet channel 286 may be formed on the first mold panel 210, or formed by corresponding grooves on the first mold panel 210 and the second mold panel 220.

According to various aspects, an entrance or opening of the inlet channel 286 may be fluidly connected to a material delivery unit, which may be similar or identical to the material delivery unit 103 of FIG. 1D.

According to various aspects, the molding unit 200 may include or define a material-holding chamber (e.g. a resin chamber, transfer pot, etc.) (not shown) configured to accommodate mold material 70 (e.g. in liquid form, pellet form, granular form, etc.). According to various aspects, the material-holding chamber may be connected to the entrance or opening of the inlet channel 286. For example, when the inlet channel 286 is situated on the second mold panel 220, the material-holding chamber may be a recess on an outer or outward-facing surface of the second mold panel 220. Alternatively, the material-holding chamber may be a recess on a second platen (e.g. similar to the second platen 129 in FIG. 1I) coupled to the second mold panel 220. Correspondingly, when the inlet channel 286 is situated on the first mold panel 210, the material-holding chamber may be a recess on an outer or outward-facing surface of the first mold panel 210, or on a first platen (e.g. similar to the first platen 119 in FIG. 1I) coupled to the first mold panel 210.

According to various aspects, the material delivery unit of the molding system 2000 may be connected to the material-holding chamber. For example, in cases where the material delivery unit employs a plunger, the plunger may be movable or inserted into the material-holding chamber to regulate delivery of mold material 70 from the material-holding chamber to the inlet channel 286, directing the mold material 70 into the inlet channel 286 and, in turn, to the plurality of mold cavities 208.

According to various other aspects, the material delivery unit of the molding system 2000 may employ a rotatable screw (e.g. a single-screw extruder used in injection-molding) connected to the inlet channel 286. In such a configuration, the rotatable screw may function by rotating and shearing mold material 70, transferring the mold material 70 from a hopper to the inlet channel 286 and, in turn, to the plurality of mold cavities 208.

Additionally, according to various aspects, a first platen and/or a second platen of the molding system 2000 may be heated (e.g. by a temperature control unit, such as the temperature control unit 106 of FIG. 1D) to facilitate melting of the mold material 70. Furthermore, vacuum may be applied to aid in the flow of mold material 70 in liquid or molten form, to the plurality of mold cavities 208. Additionally, according to various aspects, an air vent feature may be integrated to the plurality of mold cavities 208 to assist in expelling air as the mold material 70 flows therein.

According to various aspects, with reference to FIG. 2B, the first mold panel 210 may include a plurality of first closed-loop elements 211. As shown, each first closed-loop element 211 may include or may be a protruding structure or portion that protrudes inwardly (e.g. towards the second mold panel 220) from an inner surface of a main portion (e.g. a planar or elongate portion) of the first mold panel 210.

According to various aspects, the plurality of first closed-loop elements 211 may be identical or similar in shape and/or size with respect to one another. For instance, according to various aspects, such a plurality of first closed-loop elements 211 may be configured (e.g. shaped and/or sized) to support and/or engage the first peripheral regions 281a (see FIG. 2C) of identical semiconductor workpieces 280, within the molding unit 200. According to various other aspects, the plurality of first closed-loop elements 211 may differ in shape and/or size with respect to one another. For instance, according to various other aspects, such a plurality of first closed-loop elements 211 may be configured (e.g. shaped and/or sized) to support and/or engage the first peripheral regions 281a of various semiconductor workpieces 280 which may differ in shape and/or size with respect to one another.

According to various aspects, each first closed-loop element 211 may be integrally formed with the main portion of the first mold panel 210. That is, the entire first mold panel 210 may be a unified structure, which may be made of a uniform material, such as a metal or metal alloy. As some other non-limiting examples, the first mold panel 210 may be made of a polymer (e.g. heat-resistant polymer), or ceramic. According to various other aspects, the first closed-loop element 211 may be a discrete or separate component that may be attached or affixed (e.g. using adhesives, fasteners, etc.) to the inner surface of the main portion of the first mold panel 210. Consequently, according to various other aspects, the first closed-loop element 211 may be composed of a different material from the main portion. For example, the first closed-loop element 211 may be made of silicone rubber, while the main portion may be made of a metal.

According to various aspects, with reference to FIG. 2B, the second mold panel 220 may include a plurality of second closed-loop elements 221. As shown, each second closed-loop element 221 may include or may be a protruding structure or portion that protrudes inwardly (e.g. towards the first mold panel 210) from an inner surface of a main portion (e.g. a planar or elongate portion) of the second mold panel 220.

According to various aspects, the plurality of second closed-loop elements 221 may be identical or similar in shape and/or size with respect to one another. For instance, according to various aspects, such a plurality of second closed-loop elements 221 may be configured (e.g. shaped and/or sized) to engage the second peripheral regions 282a (see FIG. 2C) of identical semiconductor workpieces 280, within the molding unit 200. According to various other aspects, the plurality of second closed-loop elements 221 may differ in shape and/or size with respect to one another. For instance, according to various other aspects, such a plurality of second closed-loop elements 221 may be configured (e.g. shaped and/or sized) to engage the second peripheral regions 282a of various semiconductor workpieces 280 which may differ in shape and/or size with respect to one another.

According to various aspects, each second closed-loop element 221 may be integrally formed with the main portion of the second mold panel 220. That is, the entire second mold panel 220 may be a unified structure, which may be made of a uniform material, such as a metal or metal alloy. As some other non-limiting examples, the second mold panel 220 may be made of a polymer (e.g. heat-resistant polymer), or ceramic. According to various other aspects, the second closed-loop element 221 may be a discrete or separate component that may be attached or affixed (e.g. using adhesives, fasteners, etc.) to the inner surface of the main portion of the second mold panel 220. Consequently, according to various other aspects, the second closed-loop element 221 may be composed of a different material from the main portion. For example, the second closed-loop element 221 may be made of silicone rubber, while the main portion may be made of a metal.

According to various aspects, the first mold panel 210 and the second mold panel 220 may include an equal number of first closed-loop elements 211 and second closed-loop elements 221. Additionally, the plurality of first closed-loop elements 211 may be arranged to respectively oppose and/or be aligned with the plurality of second closed-loop elements 221.

Each first closed-loop element 211 may be configured to engage a first peripheral region 281a of a base surface 281 of a respective semiconductor workpiece 280 (e.g. within a corresponding workpiece-holding portion 810) to form a corresponding first seal, which could be either fluid-tight or impermeable to the mold material 70. Similarly, each second closed-loop element 221 may be configured to engage a second peripheral region 282a of an upper surface 282 of a respective semiconductor workpiece 280 (e.g. within a corresponding workpiece-holding portion 810) to form a corresponding second seal, which could be either fluid-tight or impermeable to the mold material 70. When a respective first closed-loop element 211 is engaged with a first peripheral region 281a of a base surface 281 of a respective semiconductor workpiece 280 to form a corresponding first seal and when a respective second closed-loop element 221 (i.e. opposing or directed towards the respective first closed-loop element 211) is engaged with a second peripheral region 282a of an upper surface 282 of the respective semiconductor workpiece 280 to form a corresponding second seal, the first seal and the second seal formed may prevent a mold material 70 within a corresponding mold cavity 208 which surrounds the respective semiconductor workpiece 280 from reaching or entering central regions of the base surface 281 and the upper surface 282 of the respective semiconductor workpiece 280, since the central regions thereof may be surrounded (or encircled) by the first seal (along the first peripheral region 281a) and the second seal (along the second peripheral region 282a) respectively.

FIG. 2C is a schematic side view of a semiconductor workpiece held by a workpiece handling unit of the molding system of FIG. 2A, according to various aspects.

FIG. 2D depicts the semiconductor workpiece of FIG. 2C disposed on a first closed-loop element of the first mold panel of the molding unit of the molding system of FIG. 2A, according to various aspects.

According to various aspects, the molding system 2000 may include a workpiece handling unit 202 configured to manipulate (e.g. adjust) a position and/or location of the semiconductor workpiece 280 relative to the workpiece-holding portion 810 of the molding unit 200. For example, the workpiece handling unit 202 may include at least one manipulator or robotic arm which may be configured to handle (e.g. pick or hold) the semiconductor workpiece 280, transport the semiconductor workpiece 280 from a first location (e.g. from an external tray or container which temporarily contains the semiconductor workpiece 280) to another location (e.g. to the molding unit 200), and dispose (e.g. place) the semiconductor workpiece 280 onto a predetermined location (e.g. within the workpiece-holding portion 810 or onto the first closed-loop element 211 of the first mold panel 210 of the molding unit 200).

According to various aspects, with reference to FIG. 2D, each first closed-loop element 211 of the first mold panel 210 may include a supporting portion 211c (e.g. a substantially planar or horizontal portion or surface) to support a respective semiconductor workpiece 280 thereon. As shown, the supporting portion 211c may also be configured to engage the first peripheral region 281a of the base surface 281 of the semiconductor workpiece 280 (e.g. to form the first seal therewith). Further, the first closed-loop element 211 may include a slopping portion (or surface) 211d that is inclined towards the supporting portion 211c for guiding (or to facilitate alignment) of the semiconductor workpiece 280 toward the supporting portion 211c. Specifically, the slopping portion 211d may be surrounding the supporting portion 211c (e.g. partially or entirely around the supporting portion 211c) and may be inclined and extending diagonally upward and away from the supporting portion 211c. According to various aspects, the slopping portion 211d may be inclined in a manner such that the semiconductor workpiece 280 may be capable of gliding or sliding along (e.g. down) the slopping portion 211d until the semiconductor workpiece 280 (or first peripheral region 281a of its base surface 281) rests (or is being supported, e.g., fully supported, or is aligned with) the supporting portion 211c of the first closed-loop element 211.

According to various other aspects (not shown), each first closed-loop element 211 of the first mold panel 210 may include a planar (e.g. flat, level, etc.) and/or horizontal (e.g. substantially horizontal) inner surface (e.g. the surface opposite and/or furthest away from the main portion of the first mold, and which defines a shape or contour of the first closed-loop element 211), without any protruding or inclined or slopping portion(s). For example, according to various other aspects, the inner surface of the first closed-loop element 211 may be level or parallel (e.g. substantially parallel) with the base surface 281 (e.g. a planar base surface 281) of the semiconductor workpiece 280.

With reference to FIG. 2C, according to various aspects, a first layer of film 205a may (e.g. optionally) be disposed over the first closed-loop element 211, before the semiconductor workpiece 280 is positioned thereon. The first layer of film 205a may conform to the shape or contour of the first closed-loop element 211. Consequently, when the semiconductor workpiece 280 is placed on the first closed-loop element 211, the first layer of film 205a may be sandwiched between the first closed-loop element 211 and the semiconductor workpiece 280, with opposite surfaces of the first layer of film 205a in direct contact with the first closed-loop element 211 and the semiconductor workpiece 280 respectively. According to various aspects, the first layer of film 205a may be a continuous layer of film arranged to cover all of the plurality of first closed-loop elements 211 of the first mold panel 210.

FIG. 2E is a schematic side view of a second mold panel opposing the first mold panel of FIG. 2D, according to various aspects.

FIG. 2F depicts a second closed-loop element of the second mold panel of FIG. 2E engaged with the semiconductor workpiece, according to various aspects.

According to various aspects, the second mold panel 220 may be movable relative to the first mold panel 210, along a movement axis 80a that extends across the first mold panel 210 and the second mold panel 220. For example, with reference to FIG. 2E and FIG. 2F, the second mold panel 220 may be moved towards the first mold panel 210 until a respective second closed-loop element 221 (i.e. opposing or directed towards the corresponding first closed-loop element 211) engages a second peripheral region 282a of an upper surface 282 of the semiconductor workpiece 280 (e.g. to form a second seal therewith).

According to various aspects, a shape and/or size of the second closed-loop element 221 may be the same as that of the first closed-loop element 211. According to various other aspects, a shape and/or size of the second closed-loop element 221 may differ from that of the first closed-loop element 211.

As an example, depicted in FIG 2E and FIG. 2F, the second closed-loop element 221 of the second mold panel 220 may include a planar (e.g. flat, level, etc.) and/or horizontal (e.g. substantially horizontal) inner surface (e.g. the surface opposite and/or furthest away from the main portion of the second mold, and which defines the shape or contour of the second closed-loop element 221), without any protruding or inclined or slopping portion(s). Thus, according to various aspects, the inner surface of the second closed-loop element 221 may be level or parallel (e.g. substantially parallel) with the upper surface 282 (e.g. a planar upper surface 282) of the semiconductor workpiece 280.

With reference to FIG. 2E, according to various aspects, a second layer of film 205b may (e.g. optionally) be disposed over the second closed-loop element 221, before the second closed-loop element 221 engages the semiconductor workpiece 280. The second layer of film 205b may conform to the shape or contour of the second closed-loop element 221. Consequently, when the second closed-loop element 221 engages the second peripheral region 282a of the upper surface 282 of the semiconductor workpiece 280, the second layer of film 205b may be sandwiched between the second closed-loop element 221 and the semiconductor workpiece 280, with opposite surfaces of the second layer of film 205b in direct contact with the second closed-loop element 221 and the semiconductor workpiece 280. According to various aspects, the second layer of film 205b may be a continuous layer of film arranged to cover all of the plurality of second closed-loop elements 221 of the second mold panel 220.

According to various aspects, the molding system 2000 may include (e.g. further include) a film dispensing unit 205. The film dispensing unit 205 may be configured to dispense any one or both of the first layer of film 205a and/or the second layer of film 205b (e.g. depending on the configuration of the molding system 2000).

As depicted in FIG. 2F, with the first closed-loop element 211 of the first mold panel 210 engaged with the first peripheral region 281a of the base surface 281 of the semiconductor workpiece 280 and with the second closed-loop element 221 of the second mold panel 220 engaged with the second peripheral region 282a of the upper surface 282 of the semiconductor workpiece 280, a respective mold cavity 208 may be formed around (or surrounding or encircling) the side surface 283 (e.g. all side surface(s)) of the semiconductor workpiece 280.

FIG. 2G depicts mold material delivered into the mold cavity formed by the first mold panel and the second mold panel of FIG. 2F, according to various aspects.

As depicted in FIG. 2G, mold material 70 delivered into the mold cavity 208 may contact and/or cover the side surface 283 of the semiconductor workpiece 280 entirely, since the entire side surface 283 of the semiconductor workpiece 280 may be exposed to the mold cavity 208 in the depiction of FIG. 2G. Subsequently, according to various aspects, the mold material 70 within the mold cavity 208 may be allowed to cure (i.e. solidify or harden) to form a molded part around the semiconductor workpiece 280, which covers the side surface 283 of the semiconductor workpiece 280 entirely. According to various aspects, a height of the resultant molded part may be equal to a thickness of the semiconductor workpiece 280.

According to various other aspects, the mold cavity 208 may be configured such that a height of the resultant molded part may be taller than the thickness of the semiconductor workpiece 280 (see, for example, FIG. 1E).

According to various other aspects (not shown), the first closed-loop element 211 and/or the second closed-loop element 221 may be shaped (e.g. may be a "L-shaped" bracket or portion) or configured to engage at least a portion or segment of the side surface 283 of the semiconductor workpiece 280 such that it covers said portion or segment of the side surface 283 of the semiconductor workpiece 280. As some non-limiting examples, the portion or segment of the side surface 283 of the semiconductor workpiece 280 covered may be a (horizontal) segment encircling the entire peripheral of the semiconductor workpiece 280, or a (vertical) segment extending from the base surface 281 to the base surface 281 (e.g. which results in the mold material 70 not enveloping the entirety of the semiconductor workpiece 280 peripheral). Accordingly, according to various other aspects, mold material 70 delivered into the mold cavity 208 may contact and/or cover only a remaining portion or segment of the semiconductor workpiece 280 that is exposed by the first closed-loop element 211 and/or the second closed-loop element 221 to the mold cavity 208. According to various other aspects, the mold material 70 within the mold cavity 208 that is allowed to cure may thus form a molded part around the semiconductor workpiece 280 which partially covers the side surface 283 of the semiconductor workpiece 280 that was exposed (directly) to the mold cavity 208.

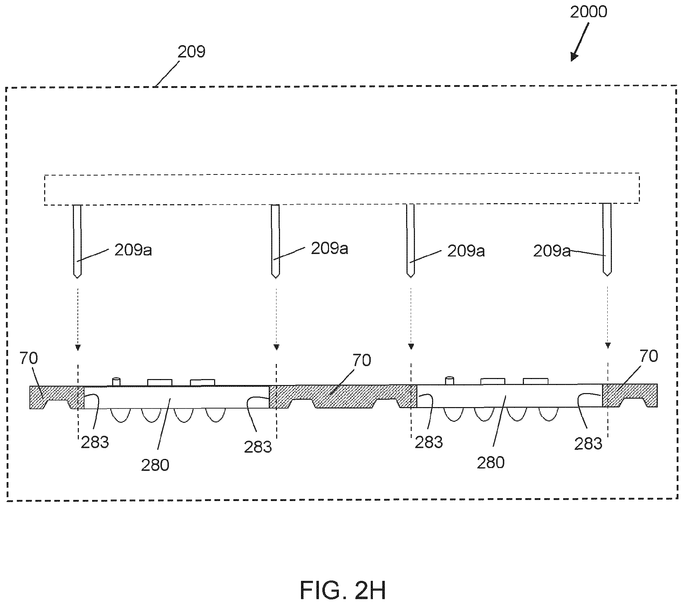

FIG. 2H depicts cured mold material around the side surfaces of the semiconductor workpieces of FIG. 2B, aligned with a dicing unit of the molding system of FIG. 2A, according to various aspects.

With reference to FIG. 2B and FIG. 2H, after mold material 70 within the plurality of mold cavities 208 is cured, the cured mold material 70 may be diced into distinct molded parts. Each molded part may surround or encircle an individual semiconductor workpiece 280, along or by the side surface 283 of the semiconductor workpiece 280.

For example, with reference to FIG. 2H, according to various aspects, the molding system 2000 may include the dicing unit 209. The dicing unit 209 may include dicing tool(s) 209a, for example, cutting blade(s), laser cutter(s), waterjet cutter(s), etc., configured to dice the cured mold material 70 (i.e. the cured integral piece of mold material 70) into distinct pieces. According to various aspects, the molding unit 200 and the dicing unit 209 may be within different chambers or modules of the molding system 2000. Consequently, the molding system 2000 (e.g. the workpiece handling unit 202 of the molding system 2000) may be configured to transfer or transport the plurality of semiconductor workpieces 280 with the cured mold material 70, from the molding unit 200 to the dicing unit 209, in order to perform the dicing on the cured mold material 70. According to various aspects, each molded part (i.e. diced from the cured mold material 70) which surrounds each semiconductor workpiece 280 may have a uniform thickness (e.g. of a value between 10 um to 20 mm, or between 15 um to 15 mm, or between 20 um to 10 mm) along the entire perimeter (or peripheral) of the semiconductor workpiece 280. According to various other aspects, each molded part (i.e. diced from the cured mold material 70) which surrounds each semiconductor workpiece 280 may have a non-uniform thickness. According to various aspects, each molded part (i.e. diced from the cured mold material 70) may have a planar (e.g. substantially planar or flat) outer side surface, for example, it may be perpendicular (e.g. substantially perpendicular) to the base surface 281 and/or the upper surface 282 of the semiconductor workpiece 280. According to various other aspects, each molded part (i.e. diced from the cured mold material 70) may have a curved or rounded outer surface which may be free of sharp edges or corners.

According to various aspects, the dicing tool(s) 209a of the dicing unit 209 may be aligned relative to fiducial mark(s) which may be present or formed on the cured mold material 70 (i.e. the cured integral piece of mold material 70) surrounding the plurality of semiconductor workpieces 280. According to various aspects, these fiducial mark(s) may be formed by textured or patterned inner surface of the second mold panel 220. For example, the inner or inward-facing surface of each second closed-loop element 221 (i.e. which defines the shape or contour of the second closed-loop element 221) may be deliberately textured or patterned to induce the formation of the fiducial mark(s) on the mold material 70 that is cured within the mold cavities 208. According to various other aspects, as other non-limiting examples, the fiducial mark(s) may be applied as ink or paint or may be printed on the cured mold material 70, or may be etched or ablated (e.g. using laser) on the cured mold material 70.

According to various other aspects, the inner surface of the second mold panel 220 may be configured to create a notch, which may facilitate the dicing or separation of the cured mold material 70 (i.e. the cured integral piece of mold material 70) into distinct pieces. According to various other aspects, the inner surface of the first mold panel 210 and/or the inner surface of the second mold panel 220 may be configured so that the portion(s) of cured mold material 70 connecting adjacent semiconductor workpieces 280 would be thinner than other portion(s), to facilitate breaking or cutting of these (thinner) portion(s).

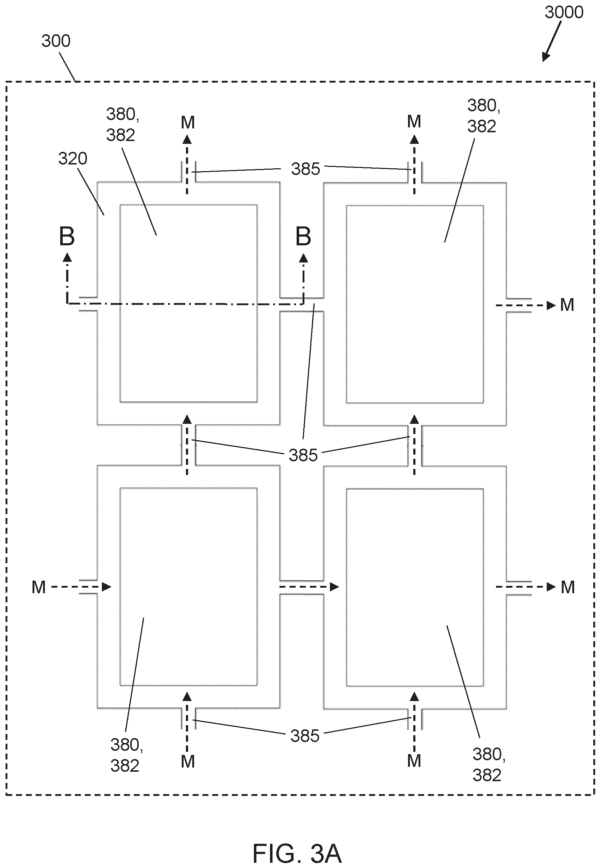

FIG. 3A is a schematic top view of a molding system which includes a molding unit with mold panels which are configured to inter-mate with corresponding grooves of a semiconductor workpiece, according to various aspects.

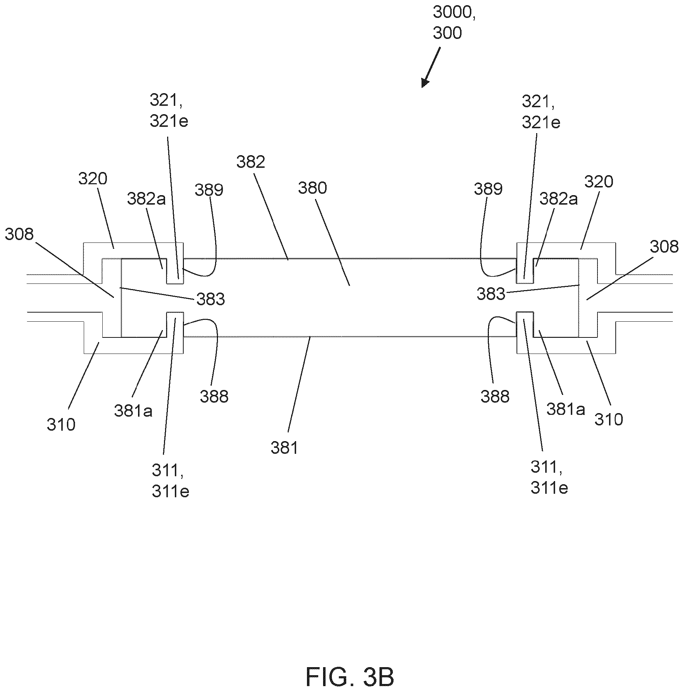

FIG. 3B is a cross-sectional view of the molding unit of the molding system of FIG. 3A, taken along line B-B, according to various aspects.

According to various aspects, there may be provided the molding system 3000. According to various aspects, the molding system 3000 may contain any one or more or all the features and/or limitations of the molding system 1000 of FIG. 1A and/or the molding system 1000a of FIG. 1G and/or the molding system 1000b of FIG. 1I and/or the molding system 2000 of FIG. 2A. In the following, the molding system 3000 is described with like reference characters generally referring to the same or corresponding parts/features of the molding system 1000 of FIG. 1A and/or the molding system 1000a of FIG. 1G and/or the molding system 1000b of FIG. 1I and/or the molding system 2000 of FIG. 2A. The description of the parts/features made with respect to the molding system 3000 may also be applicable with respect to the molding system 1000 and/or 1000a and/or 1000b and/or 2000, and vice versa.

According to various aspects, with reference to FIG. 3B, the molding unit 300 of the molding system 3000 may include a first mold panel 310 and a second mold panel 320.

According to various aspects, the first mold panel 310 and the second mold panel 320 may be configured to define or form a plurality of mold cavities 308.

For ease of description, various aspects may be described with reference to the first mold panel 310 and the second mold panel 320 defining or forming a plurality of mold cavities 308. Nevertheless, is understood that aspects described as such are not limited thereto. Thus, for example, according to various other aspects, the first mold panel 310 and the second mold panel 320 may be configured to define or form a (e.g. single) mold cavity 308.

According to various aspects, the first mold panel 310 may include a plurality of first closed-loop elements 311.

Referring to FIG. 3B, according to various aspects, each first closed-loop element 311 may include or may be a respective first projection (or protrusion) 311e configured to inter-engage or inter-mate or fit or be inserted into a first groove 388 (e.g. trench) on a base surface 381 of a corresponding semiconductor workpiece 380 to form a first seal.

As depicted in FIG. 3B, the first groove 388 of the semiconductor workpiece 380 may be at the base surface 381 of the semiconductor workpiece 380, specifically, the first groove 388 may be extending along a first peripheral region 381a of the base surface 381 of the semiconductor workpiece 380. Accordingly, the first groove 388 may be a closed-loop groove that extends continuously, without any breaks or discontinuity, along the entire peripheral region 381a of the base surface 381 of the semiconductor workpiece 380.

According to various aspects, an outline (e.g. the closed-loop or annular outline or shape) of the first groove 388 may correspond to (e.g. may match) an outline (e.g. the closed-loop or annular outline or shape) of the first closed-loop element 311. Specifically, according to various aspects, a shape or contour of the first groove 388 (e.g. defined by inner surface(s) of the first groove 388) may correspond to (e.g. may match) a shape or contour of the first projection 311e (e.g. defined by outer surface(s) of the first projection 311e). For example, a width (e.g. a uniform width) and/or a depth (e.g. a uniform depth) of the first groove 388 may be substantially equal to a width (e.g. a uniform width) and/or a height (e.g. a uniform height) of the first projection 311e to accommodate the first projection 311e (e.g. in a snug-fit manner). According to various other aspects, a size (e.g. a uniform width) of the first groove 388 may be larger than a width (e.g. a uniform width) of the first projection 311e to accommodate the first projection 311e.

According to various aspects, the second mold panel 320 may include a plurality of second closed-loop elements 321.

Referring to FIG. 3B, according to various aspects, each second closed-loop element 321 may include or may be a respective second projection (or protrusion) 321e configured to inter-engage or inter-mate or fit or be inserted into a second groove 389 (e.g. trench) on an upper surface 382 of a corresponding semiconductor workpiece 380 to form a second seal.

As depicted in FIG. 3B, the second groove 389 of the semiconductor workpiece 380 may be at the upper surface 382 of the semiconductor workpiece 380, specifically, the second groove 389 may be extending along a second peripheral region 382a of the upper surface 382 of the semiconductor workpiece 380. Accordingly, the second groove 389 may be a closed-loop groove that extends continuously, without any breaks or discontinuity, along the entire peripheral region 382a of the upper surface 382 of the semiconductor workpiece 380.

According to various aspects, an outline (e.g. the closed-loop or annular outline or shape) of the second groove 389 may correspond to (e.g. may match) an outline (e.g. the closed-loop or annular outline or shape) of the second closed-loop element 321. Specifically, according to various aspects, a shape or contour of the second groove 389 (e.g. defined by inner surface(s) of the second groove 389) may correspond to (e.g. may match) a shape or contour of the second projection 321e (e.g. defined by outer surface(s) of the second projection 321e). For example, a width (e.g. a uniform width) and/or a depth (e.g. a uniform depth) of the second groove 389 may be substantially equal to a width (e.g. a uniform width) and/or a height (e.g. a uniform height) of the second projection 321e to accommodate the second projection 321e (e.g. in a snug-fit manner). According to various other aspects, a size (e.g. a uniform width) of the second groove 389 may be larger than a width (e.g. a uniform width) of the second projection 321e to accommodate the second projection 321e.

According to various aspects, the first groove 388 and the second groove 389 may be formed by any suitable method or process, such as etching (e.g. laser etching, micro etching, etc.), milling, drilling (e.g. laser drilling), etc., the respective surfaces 381 and 382 of the semiconductor workpiece 380.

With reference to FIG. 3B, according to various aspects, with the first projection 311e inter-engaged with the first groove 388 of the semiconductor workpiece 380 and with the second projection 321e inter-engaged with the second groove 389 of the semiconductor workpiece 380 opposite the first groove 388 (in other words, with the first mold panel 310 and the second mold panel 320 clamping and sealing the semiconductor workpiece 380 at its peripheral regions 381a and 382a, or at the first groove 388 and the second groove 389), a corresponding mold cavity 308 may be formed around and/or along the side surface 383 of the semiconductor workpiece 380. Accordingly, according to various aspects, each mold cavity 308 of the plurality of mold cavities 308 of the molding unit 300 may be configured or shaped to surround or encircle a respective semiconductor workpiece 380 (i.e. within a corresponding workpiece-holding portion of the molding unit 300), along the side surface 383 of the semiconductor workpiece 380.

According to various aspects, the plurality of mold cavities 308 of the molding unit 300 may be interconnected, in other words, in fluidic communication or connection to one another. In particular, the molding unit 300 may include one or more fluid channel(s) (e.g. runner(s)) 385, as depicted in FIG. 3A, which fluidly connect (or interconnect) the plurality of mold cavities 308. As an example, with reference to FIG. 3A, the molding unit 300 (e.g. the first mold panel 310 and the second mold panel 320 of the molding unit 300) may include a plurality of (in other words, multiple) fluid channels 385 which may be fluidly connected to one another. An exemplar flow trajectory for mold material 70 is delineated through the dashed lines denoted as 'M' in FIG. 3A.

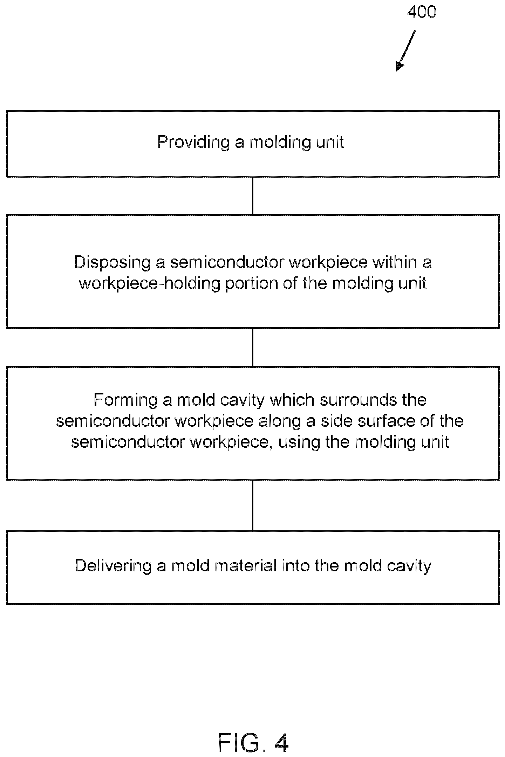

FIG. 4 depicts a molding method, according to various aspects.

According to various aspects, there may be provided the molding method 400.

According to various aspects, the molding method 400 may include providing the molding unit 100, 200 or 300. Accordingly, the molding unit 100, 200 or 300 may include the first mold panel 110, 210 or 310 and the second mold panel 120, 220 or 320.

According to various aspects, the molding method 400 may include (e.g. further include) disposing the semiconductor workpiece 180 (or the plurality of semiconductor workpieces 280 or 380) within the workpiece-holding portion 81 (or the workpiece-holding portions 810) of the molding unit 100, 200 or 300, for example, using the workpiece handling unit 102 or 202.

According to various aspects, the molding method 400 may include (e.g. further include) engaging the first peripheral region 181a, 281a or 381a of the base surface 181, 281 or 381 of the semiconductor workpiece 180 (or of each semiconductor workpiece 280 or 380) with the first closed-loop element 111 (or a respective first closed-loop element 211 or 311 of the plurality of first closed-loop elements 211 or 311) of the first mold panel 110, 210 or 310 as well as engaging the second peripheral region 182a, 282a or 382a of the upper surface 182, 282 or 382 of the semiconductor workpiece 180 (or of each semiconductor workpiece 280 or 380) with the second closed-loop element 121 (or a respective second closed-loop element 221 or 321 of the plurality of second closed-loop elements 221 or 321) of the second mold panel 120, 220 or 320, such that the first mold panel 110, 210 or 310 and the second mold panel 120, 220 or 320 define or form or create or include the mold cavity 108, 208 or 308 surrounding or around the semiconductor workpiece 180 (or each semiconductor workpiece 280 or 380) along the side surface 183, 283 or 383 of the semiconductor workpiece 180, 280 or 380. According to various aspects, engaging the first peripheral region 181a, 281a or 381a of the base surface 181, 281 or 381 of the semiconductor workpiece 180 (or of each semiconductor workpiece 280 or 380) with the first closed-loop element 111 (or with a respective first closed-loop element 211 or 311 of the plurality of first closed-loop elements 211 or 311) of the first mold panel 110, 210 or 310 as well as engaging the second peripheral region 182a, 282a or 382a of the upper surface 182, 282 or 382 of the semiconductor workpiece 180 (or of each semiconductor workpiece 280 or 380) with the second closed-loop element 121 (or with a respective second closed-loop element 221 or 321 of the plurality of second closed-loop elements 221 or 321) of the second mold panel 120, 220 or 320 may be performed by moving or bringing the first mold panel 110, 210 or 310 and the second mold panel 120, 220 or 320 toward each other, while the semiconductor workpiece(s) 180, 280 or 380 are between the first mold panel 110, 210 or 310 and the second mold panel 120, 220 or 320.

According to various aspects, the molding method 400 may include (e.g. further include) forming the first groove 388 on the base surface 181, 281 or 381 of the semiconductor workpiece 180 (or on each semiconductor workpiece 280 or 380) and forming the second groove 389 on the upper surface 182, 282 or 382 of the semiconductor workpiece 180 (or on each semiconductor workpiece 280 or 380). According to various aspects, the molding method 400 may include (e.g. further include) inter-mating or engaging or inserting the first projection 311e of each first closed-loop element 311 with or into a corresponding first groove 388 as well as inter-mating or engaging or inserting the second projection 321e of each second closed-loop element 321 with or into a corresponding second groove 389.

According to various other aspects, the molding method 400 may include (e.g. further include) covering or interchanging or replacing the first mold panel 110, 210 or 310 or the second mold panel 120, 220 or 320 with the auxiliary mold panel 130 or with a further auxiliary mold panel.

According to various aspects, the molding method 400 may include (e.g. further include) delivering the mold material 70 into the mold cavity 108 (or into the plurality of mold cavities 208 or 308), for example, using the material delivery unit 103. According to various aspects, the mold material 70 may be delivered into the plurality of mold cavities 208 or 308 concurrently or simultaneously, for example, from the inlet channel 286 (e.g. a single inlet channel) in connection with the material delivery unit 103.

According to various aspects, the molding method 400 may include heating or melting the mold material 70, for example, using the temperature control unit 106.

According to various aspects, the molding method 400 may include (e.g. further include) disposing or depositing the first layer of film 205a (e.g. using the film dispensing unit 205) over the first closed-loop element 111 (or over the plurality of first closed-loop elements 211 or 311) of the first mold panel 110, 210 or 310, before engaging the first peripheral region 181a, 281a or 381a of the base surface 181, 281 or 381 of the semiconductor workpiece 180 (or of each semiconductor workpiece 280 or 380) with the first closed-loop element 111 (or with the respective first closed-loop element 211 or 311 of the plurality of first closed-loop elements 211 or 311).

According to various aspects, the molding method 400 may include (e.g. further include) disposing or depositing the second layer of film 205b (e.g. using the film dispensing unit 205) over the second closed-loop element 121 (or over the plurality of second closed-loop elements 221 or 321) of the second mold panel 120, 220 or 320, before engaging the second peripheral region 182a, 282a or 382a of the upper surface 182, 282 or 382 of the semiconductor workpiece 180 (or of each semiconductor workpiece 280 or 380) with the second closed-loop element 121 (or with the respective second closed-loop element 221 or 321 of the plurality of second closed-loop elements 221 or 321).

According to various aspects, the molding method 400 may include (e.g. further include) curing the mold material 70 while the mold material 70 is within the mold cavity 108 (or within the plurality of mold cavities 208 or 308). In other words, the mold material 70 may undergo a curing process while the mold material 70 is within the mold cavity 108 (or within the plurality of mold cavities 208 or 308). The curing process may involve, but is not limited to, thermal curing (e.g. within an oven), ultraviolet curing, room-temperature curing, moisture curing, microwave curing, laser curing, or infrared curing, etc. According to various aspects, the mold material 70 may be configured to be cured and solidified within minutes. The cured mold material 70 may be configured to adhere to or bond effectively with the side surface 183, 283 or 383 of the semiconductor workpiece(s) 180, 280 or 380. For example, an adhesion promoter, such as silane, may (e.g. optionally) be applied or coated onto the side surface 183, 283 or 383 of the semiconductor workpiece(s) 180, 280 or 380 as a pre-treatment step prior to the molding process which involves delivering the mold material 70 into the mold cavity 108 (or to the plurality of mold cavities 208 or 308) (e.g. until the mold material 70 completely or substantially fills the mold cavity 70 or the plurality of mold cavities 208 or 308). According to various aspects, the adhesion promoter may be selectively applied to only specific surface(s) of the semiconductor workpiece(s) 180, 280 or 380 (e.g. solely to the side surface 183, 283 or 383 of each semiconductor workpiece 180, 280 or 380), by covering the remaining surface(s) (e.g. the base surface 181, 281 or 381 and the upper surface 182, 282 or 382 of the semiconductor workpiece 180, 280 or 380) with a mask (e.g. a physical mask), prior to the application of the adhesion promoter.

According to various aspects, the molding method 400 may include (e.g. further include) cooling the cured mold material 70 (e.g. after the aforementioned curing process has been performed). For example, the cured mold material 70 may be cooled to room temperature.

According to various aspects, the molding method 400 may include (e.g. further include) demolding the semiconductor workpiece(s) 180, 280 or 380 with the cured mold material 70. For example, the ejector unit 107 may be employed to move (e.g. push or eject) the semiconductor workpiece(s) 180, 280 or 380 with the cured mold material 70 away from the workpiece-holding portion(s) 81 or 810 or away from the first mold panel 110, 210 or 310. According to various aspects, to facilitate demolding, an inner surface of the first mold panel 110, 210 or 310 may include a draft angle or a taper angle, such as that of the slopping portion 11 1d of the first closed-loop element 111.

According to various aspects, the molding method 400 may include removing any cull (e.g. defects, such as protrusions, runner material, etc.) and/or severing a sprue (e.g. sprue material) or a gate (e.g. gate material), by cutting the cured mold material 70. For example, one or more sharp-edged (ejectable) pins or cutters (e.g. of the ejector unit 107, or of a degater) may be mobilized to dislodge a sprue or a gate and/or remove excess cured mold material 70 (e.g. cull) as required.

According to various aspects, the molding method 400 may include cutting the cured mold material 70 (e.g. after the demolding has been performed). For example, the cured mold material 70 may be diced into distinct molding parts, with each distinct molded part surrounding or encircling an individual semiconductor workpiece 180, 280 or 380. As another example, the cured mold material 70 may be cut (e.g. trimmed) around its edges to remove excess cured mold material 70 as required. According to various aspects, the molding system 1000, 1000a, 1000b, 2000 or 3000 may include a laser unit (or module), and the molding method 400 may employ the laser unit for cutting the cured mold material 70. The laser unit may include multiple laser cutting heads to enhance productivity. Additionally, laser singulation or trimming may be employed to enhance the precision of the molded part's geometry. In other words, the laser unit may offer precise edge trimming capabilities to ensure adherence of the mold part to geometrical tolerances. The laser unit may utilize various laser sources, such as carbon dioxide or CO₂ lasers or other gas lasers, excimer lasers, fiber lasers, neodymium-doped yttrium aluminum garnet or Nd:YAG lasers, neodymium-doped yttrium orthovanadate or Nd:YVO lasers, dye lasers, etc. For quality control purposes, an optional Automated Optical Inspection camera unit may be integrated into the laser unit.

Accordingly, according to various aspects, the molding method 400 may include (e.g. further include) cutting the cured mold material 70 to form a molded part around each semiconductor workpiece 180, 280 or 380 which serves to protect the side surface 183, 283 or 383 of the semiconductor workpiece 180, 280 or 380. That is, the molded part (i.e. cured mold material 70) may serve as a protective layer on or over the side surface 183, 283 or 383 of each semiconductor workpiece 180, 280 or 380.

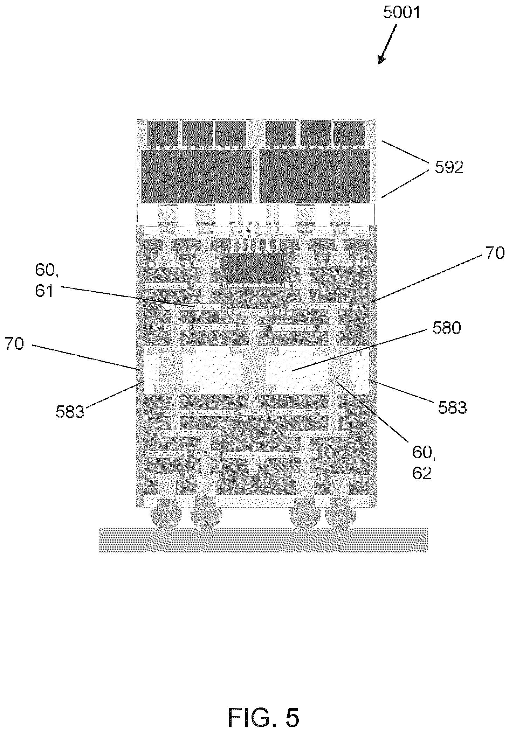

FIG. 5 is a side view of an exemplary final product, which may result from the molding method of FIG. 4, according to various aspects.

As illustrated in FIG. 5, the final product 5001 may include a semiconductor workpiece 580 (e.g. glass, a glass panel, a glass core, or a glass substrate, etc.), which may be similar to the semiconductor workpiece 180, 280 or 380. As shown, the side surfaces 583 (e.g. all side surfaces) of the semiconductor workpiece 580 may be covered or enveloped by a molded part (e.g. cured mold material 70), which serves as a safeguarding layer (or a layer of protection) for the side surfaces 583 of the semiconductor workpiece 580.

As an example, as depicted in FIG. 5, the final product 5001 may include one or more component(s) 592 (e.g. top die(s), memory, etc.), which may be free of the mold material 70 (or the molded part). According to various aspects, as depicted in FIG. 5, the final product 5001 may include or incorporate an interconnect structure 60. The interconnect structure 60 may include layer(s) or line(s) 61 (e.g. copper layer(s) or line(s)) as well as via(s) 62 (e.g. copper via(s)).

Various aspects described above may provide a molding system and a molding method that allow efficient and accurate application of a protective layer (i.e. the cured mold material), on the side surface(s) of semiconductor workpiece(s).

Moreover, the molding system and the molding method, according to various aspects, may substantially boost production efficiency and throughput by enabling simultaneous material application or coating on side surfaces on multiple semiconductor workpieces. The molding system and the molding method may not only reduce manufacturing time but may also ensure a high level of consistency in material application or coating quality.

Furthermore, the molding system and the molding method, according to various aspects, may minimize or mitigate risk of contamination of the top surface (i.e. upper surface) and/or bottom surface (i.e. base surface) of semiconductor workpiece(s) during the material application or coating process.

Various aspects also provide a versatile molding system and molding method, as the molding system and the molding method may be configured to accommodate various semiconductor workpiece shapes and sizes.

To more readily understand and put into practical effect the present molding system and molding method, they will now be described by way of examples. For the sake of brevity, duplicate descriptions of features and properties may be omitted.

### Examples

Example 1 provides a system (e.g. molding system). The system may include a molding unit. The molding unit may include (i) a workpiece-holding portion configured to accommodate a semiconductor workpiece, (ii) a first mold panel which may include a first closed-loop element, the first closed-loop element configured to engage a first peripheral region of a base surface of a semiconductor workpiece, and (iii) a second mold panel which may include a second closed-loop element, the second closed-loop element configured to engage a second peripheral region of an upper surface of the semiconductor workpiece. The first mold panel and the second mold panel may include (or may be configured to form) a mold cavity configured to (or which may) surround the semiconductor workpiece along a side surface of the semiconductor workpiece, with the first closed-loop element and the second closed-loop element, respectively, engaged with the first peripheral region and the second peripheral region of the semiconductor workpiece.

Example 2 may include the system of example 1 and/or any other example disclosed herein, for which the system may further include a material delivery unit configured to be in fluidic communication with the mold cavity to deliver mold material into the mold cavity.

Example 3 may include the system of example 2, for which the material delivery unit may include a plunger or a rotatable screw.

Example 4 may include the system of example 1 and/or any other example disclosed herein, for which the first closed-loop element of the first mold panel may include a supporting portion to support the semiconductor workpiece thereon, and a sloping portion that is inclined towards the supporting portion to guide the semiconductor workpiece toward the supporting portion.

Example 5 may include the system of example 1 and/or any other example disclosed herein, for which the second mold panel may be movable relative to the first mold panel, along a movement axis that extends across the first mold panel and the second mold panel.

Example 6 may include the system of example 5, for which the molding unit may further include a movable platen coupled to the second mold panel to move the second mold panel along the movement axis, and a suspension assembly disposed between the second mold panel and the movable platen to suspend the second mold panel relative to the movable platen.

Example 7 may include the system of example 6, for which the suspension assembly may include at least one spring disposed between the movable platen and the second mold panel. The at least one spring may be configured to bias the second mold panel away from the movable platen.

Example 8 may include the system of example 5, for which the molding unit may further include a movable platen coupled to the second mold panel to move the second mold panel along the movement axis, and an auxiliary mold panel configured to be detachably coupled to the movable platen, to cover the second mold panel. The auxiliary mold panel may include an auxiliary closed-loop element which differs from the second closed-loop element of the second mold panel.

Example 9 may include the system of example 1 and/or any other example disclosed herein, for which the system may further include a workpiece handling unit configured to adjust a position of the semiconductor workpiece relative to the workpiece-holding portion.

Example 10 may include the system of example 1 and/or any other example disclosed herein, for which the molding unit may further include an ejector unit configured to eject the semiconductor workpiece away from the workpiece-holding portion.

Example 11 may include the system of example 1 and/or any other example disclosed herein, for which the first closed-loop element may include a first projection configured to inter-mate with a first groove which extends along the first peripheral region of the semiconductor workpiece, and for which the second closed-loop element may include a second projection configured to inter-mate with a second groove which extends along the second peripheral region of the semiconductor workpiece.

Example 12 may include the system of example 1 and/or any other example disclosed herein, for which the system may further include a film dispensing unit configured to dispense a first layer of film over the first closed-loop element of the first mold panel and/or to dispense a second layer of film over the second closed-loop element of the second mold panel.

Example 13 may include the system of example 1 and/or any other example disclosed herein, for which the system may further include a temperature control unit configured to adjust a temperature of the first mold panel or the second mold panel.

Example 14 provides a system (e.g. molding system). The system may include a molding unit which may include (i) a plurality of workpiece-holding portions configured to accommodate a plurality of semiconductor workpieces, (ii) a first mold panel which may include a plurality of first closed-loop elements, and (iii) a second mold panel which may include a plurality of second closed-loop elements. The first mold panel and the second mold panel may include or may be configured to form a plurality of interconnected mold cavities. Each mold cavity, of the plurality of interconnected mold cavities, may be configured to surround a respective semiconductor workpiece along a side surface of the semiconductor workpiece, with a respective first closed-loop element engaged with a first peripheral region of a base surface of the semiconductor workpiece and a respective second closed-loop element engaged with a second peripheral region of an upper surface of the semiconductor workpiece.

Example 15 may include the system of example 14, for which the system may further include an inlet channel that extends across the first mold panel or the second mold panel, and a material delivery unit configured to be in fluidic communication with the plurality of interconnected mold cavities via the inlet channel. The material delivery unit may be configured to deliver mold material into the plurality of interconnected mold cavities via the inlet channel.

Example 16 provides a method (e.g. molding method). The method may include providing a molding unit which includes a first mold panel and a second mold panel, wherein the first mold panel may include a first closed-loop element, and wherein the second mold panel may include a second closed-loop element. The method may further include disposing a semiconductor workpiece within a workpiece-holding portion of the molding unit. The method may further include engaging a first peripheral region of a base surface of the semiconductor workpiece with the first closed-loop element of the first mold panel and engaging a second peripheral region of an upper surface of the semiconductor workpiece with the second closed-loop element of the second mold panel, such that the first mold panel and the second mold panel forms a mold cavity surrounding the semiconductor workpiece along a side surface of the semiconductor workpiece. The method may further include delivering a mold material into the mold cavity.

Example 17 may include the method of example 16 and/or any other example disclosed herein, for which the method may further include disposing a first layer of film over the first closed-loop element of the first mold panel, before engaging the first peripheral region of the base surface of the semiconductor workpiece with the first closed-loop element, and/or further include disposing a second layer of film over the second closed-loop element of the second mold panel, before engaging the second peripheral region of the upper surface of the semiconductor workpiece with the second closed-loop element.

Example 18 may include the method of example 16 and/or any other example disclosed herein, for which the method may further include curing the mold material while the mold material is within the mold cavity, wherein the cured mold material may be configured to adhere to the side surface of the semiconductor workpiece.

Example 19 may include the method of example 18, for which the method may further include moving the second mold panel away from the first mold panel, and ejecting the semiconductor workpiece with the cured mold material away from the workpiece-holding portion.

Example 20 may include the method of example 19, for which the method may further include cutting the cured mold material to form a molded part around the semiconductor workpiece which may serve to protect the side surface of the semiconductor workpiece.

## Claims

1. A system comprising:
a molding unit comprising:
a workpiece-holding portion configured to accommodate a semiconductor workpiece,
a first mold panel comprising a first closed-loop element, the first closed-loop element configured to engage a first peripheral region of a base surface of the semiconductor workpiece, and
a second mold panel comprising a second closed-loop element, the second closed-loop element configured to engage a second peripheral region of an upper surface of the semiconductor workpiece,
wherein the first mold panel and the second mold panel comprise a mold cavity configured to surround the semiconductor workpiece along a side surface of the semiconductor workpiece, with the first closed-loop element and the second closed-loop element, respectively, engaged with the first peripheral region and the second peripheral region of the semiconductor workpiece.

2. The system of claim 1, further comprising:
a material delivery unit configured to be in fluidic communication with the mold cavity to deliver mold material into the mold cavity;
preferably wherein the material delivery unit comprises a plunger or a rotatable screw.

3. The system of any one of claims 1 or 2,
wherein the first closed-loop element of the first mold panel comprises:
a supporting portion to support the semiconductor workpiece thereon, and
a sloping portion that is inclined towards the supporting portion to guide the semiconductor workpiece toward the supporting portion.

4. The system of any one of claims 1 to 3,
wherein the second mold panel is movable relative to the first mold panel, along a movement axis that extends across the first mold panel and the second mold panel.

5. The system of claim 4,
wherein the molding unit further comprises:
a movable platen coupled to the second mold panel to move the second mold panel along the movement axis, and
a suspension assembly disposed between the second mold panel and the movable platen to suspend the second mold panel relative to the movable platen;
preferably wherein the suspension assembly comprises at least one spring disposed between the movable platen and the second mold panel, wherein the at least one spring is configured to bias the second mold panel away from the movable platen.

6. The system of any one of claims 4 or 5,
wherein the molding unit further comprises:
a movable platen coupled to the second mold panel to move the second mold panel along the movement axis, and
an auxiliary mold panel configured to be detachably coupled to the movable platen, to cover the second mold panel,
wherein the auxiliary mold panel comprises an auxiliary closed-loop element, which differs from the second closed-loop element of the second mold panel.

7. The system of any one of claims 1 to 6, further comprising:
a workpiece handling unit configured to adjust a position of the semiconductor workpiece relative to the workpiece-holding portion.

8. The system of any one of claims 1 to 7,
wherein the molding unit further comprises:
an ejector unit configured to eject the semiconductor workpiece away from the workpiece-holding portion.

9. The system of any one of claims 1 to 8,
wherein the first closed-loop element comprises a first projection configured to inter-mate with a first groove which extends along the first peripheral region of the semiconductor workpiece; and
wherein the second closed-loop element comprises a second projection configured to inter-mate with a second groove which extends along the second peripheral region of the semiconductor workpiece.

10. The system of any one of claims 1 to 9, further comprising:
a film dispensing unit configured to dispense a first layer of film over the first closed-loop element of the first mold panel or to dispense a second layer of film over the second closed-loop element of the second mold panel.

11. The system of any one of claims 1 to 10, further comprising:
a temperature control unit configured to adjust a temperature of the first mold panel or the second mold panel.

12. A method comprising:
providing a molding unit comprising a first mold panel and a second mold panel, wherein the first mold panel comprises a first closed-loop element and the second mold panel comprises a second closed-loop element;
disposing a semiconductor workpiece within a workpiece-holding portion of the molding unit;
engaging a first peripheral region of a base surface of the semiconductor workpiece with the first closed-loop element of the first mold panel and engaging a second peripheral region of an upper surface of the semiconductor workpiece with the second closed-loop element of the second mold panel, such that the first mold panel and the second mold panel forms a mold cavity surrounding the semiconductor workpiece along a side surface of the semiconductor workpiece; and
delivering a mold material into the mold cavity.

13. The method of claim 12, further comprising:
disposing a first layer of film over the first closed-loop element of the first mold panel, before engaging the first peripheral region of the base surface of the semiconductor workpiece with the first closed-loop element, or
disposing a second layer of film over the second closed-loop element of the second mold panel, before engaging the second peripheral region of the upper surface of the semiconductor workpiece with the second closed-loop element.

14. The method of any one of claims 12 or 13, further comprising:
curing the mold material while the mold material is within the mold cavity,
wherein the cured mold material is configured to adhere to the side surface of the semiconductor workpiece.

15. The method of claim 14, further comprising:
moving the second mold panel away from the first mold panel; and
ejecting the semiconductor workpiece with the cured mold material away from the workpiece-holding portion;
preferably the method further comprising cutting the cured mold material to form a molded part around the semiconductor workpiece which serves to protect the side surface of the semiconductor workpiece.
